# EUROPÄISCHE PATENTANMELDUNG

(11) **EP 4 592 818 A1**
(43) Veröffentlichungstag der Anmeldung: **30.07.2025**
(21) Anmeldenummer: 25154026.6
(22) Anmeldetag: 27.01.2025
(51) Int. Cl.: G06F 3/12, H04N 1/34

(54) **SYSTEM ZUM DRUCKEN VON DRUCKOBJEKTEN, INSBESONDERE VON FOTOS**

(30) Priorität: 26.01.2024 DE 102024102294
(71) Anmelder: CEWE Stiftung & Co. KGaA, 26133 Oldenburg (DE)
(72) Erfinder: Schmidt, Benjamin, 26340 Zetel (DE); Schenk, Sancho Johannes, 26203 Tungeln (DE)
(74) Vertreter: Eisenführ Speiser

(57) **Zusammenfassung**

Die Erfindung bezieht sich auf ein System zum Drucken von Druckobjekten, insbesondere von Fotos, durch eine Druckvorrichtung 4, beispielsweise eine Fotostation. Die Druckvorrichtung 4 überträgt eine Task-Mitteilung, die einen gewünschten Task angibt, zu einem Serversystem 9, das einen Link zum Verbinden eines Benutzergeräts 3, das beispielsweise ein Smartphone ist, mit dem Serversystem 9 zurücksendet. Der erste Link wird von der Druckvorrichtung 4 an das Benutzergerät 3 übermittelt, wonach mittels des ersten Links eine Datenverbindung zwischen dem Benutzergerät 3 und dem Serversystem aufgebaut wird. Nachdem diese Datenverbindung aufgebaut worden ist, initiiert das Serversystem einen Aufbau einer Datenverbindung zwischen dem Benutzergerät 3 und einem Tasksystem 23. Nachdem diese Datenverbindung aufgebaut worden ist, wird der benutzer-interaktive Task durch das Tasksystem 23 ausgeführt, wobei für die Interaktion mit dem Benutzer das Benutzergerät 3 verwendet wird. Die Druckobjekte werden schließlich durch die Druckvorrichtung 4 in Abhängigkeit von dem Ergebnis der Ausführung des benutzer-interaktiven Tasks gedruckt.

## Beschreibung

Die Erfindung bezieht sich auf ein System, ein Verfahren und ein Computerprogram zum Drucken von Druckobjekten, insbesondere von Fotos, durch eine Druckvorrichtung, insbesondere in einem SB-Bereich beispielsweise einer Drogerie. Die Erfindung bezieht sich zudem auf eine Druckvorrichtung, insbesondere eine Fotostation zum Drucken von Fotos, und ein Serversystem zur Verwendung in einem derartigen System.

Druckvorrichtungen sind beispielsweise Fotostationen, an denen Fotos ausgedruckt werden können. Diese stehen heutzutage häufig in Drogerien und Supermärkten, wobei es eine Aufgabe der vorliegenden Erfindung ist, die Datensicherheit beim Druckprozess zu erhöhen. Es ist insbesondere eine Aufgabe der vorliegenden Erfindung, ein System zum Drucken von Druckobjekten durch eine Druckvorrichtung, insbesondere in einem SB-Bereich beispielsweise einer Drogerie, bereitzustellen, das einen manipulationssicheren Druckprozess ermöglicht. Es ist eine weitere Aufgabe der vorliegenden Erfindung, ein entsprechendes Verfahren und ein entsprechendes Computerprogramm zum Drucken von Druckobjekten durch eine Druckvorrichtung, insbesondere in einem SB-Bereich beispielsweise einer Drogerie, bereitzustellen.

Der Druckprozess kann beinhalten, dass ein Benutzer über sein Smartphone mit einem anderen System, das eine Aufgabe durchführt, kommuniziert. Diese Aufgabe wird im Weiteren als "*Task*" bezeichnet. Dementsprechend wird das System, das diesen Task durchführt, als Tasksystem bezeichnet.

In dem Tasksystem können beispielsweise Fotos gespeichert sein, wobei das Smartphone des Benutzers mit dem Tasksystem verbunden werden kann, um es dem Benutzer zu ermöglichen, Fotos, die in dem Tasksystem gespeichert sind, auszuwählen, wonach die ausgewählten Fotos von dem Tasksystem an die Fotostation übermittelt werden.

Bevor der Benutzer mittels seines Smartphones Fotos, die in dem Tasksystem gespeichert sind, auswählen kann, muss sich der Benutzer legitimieren. So kann der Benutzer beispielsweise aufgefordert werden, eine E-Mail-Adresse und ein Passwort einzugeben, um auf seine in dem Tasksystem gespeicherten Fotos zugreifen zu können.

Es ist grundsätzlich möglich, den gesamten Prozess so zu manipulieren, dass das Smartphone keine Datenverbindung zu dem gewünschten Tasksystem aufbaut, sondern zu einem anderen System, das dem Benutzer lediglich suggeriert, dass die Datenverbindung zwischen dem Smartphone und dem Tasksystem hergestellt worden ist. Beispielsweise kann dieses System, das im Folgenden als Manipulationssystem bezeichnet wird, eine grafische Benutzeroberfläche auf dem Smartphone zur Verfügung stellen, die einer grafischen Benutzeroberfläche des eigentlich gewünschten Tasksystems sehr ähnlich oder sogar zu dieser identisch ist. Dies kann dazu führen, dass der Benutzer über sein Smartphone persönliche Daten, insbesondere Legitimationsdaten wie Passwörter, dem Manipulationssystem mitteilt. Dieses ungewollte Mitteilen persönlicher Daten, insbesondere von Legitimationsdaten, an das Manipulationssystem kann auch dann erfolgen, wenn das Tasksystem ausgestaltet ist, einen anderen Task auszuführen. So kann das Tasksystem beispielsweise ausgestaltet sein, einen Bezahlvorgang durchzuführen. In diesem Fall könnte das Manipulationssystem neben den persönlichen Daten auch beispielsweise Informationen über Kreditkarten erhalten.

Um beim Drucken von Druckobjekten, insbesondere von Fotos, durch eine Druckvorrichtung die Manipulationssicherheit zu erhöhen, ist daher ein System zum Drucken von Druckobjekten durch eine Druckvorrichtung, insbesondere in einem SB-Bereich beispielsweise einer Drogerie, vorgesehen, das umfasst:
- ein Serversystem, das mit der Druckvorrichtung über eine erste Datenverbindung verbunden ist und mit einem Benutzergerät eines Benutzers, insbesondere eines Smartphones, über eine zweite Datenverbindung verbindbar ist,
- die Druckvorrichtung, wobei die Druckvorrichtung konfiguriert ist, die Druckobjekte zu drucken,
wobei das System so konfiguriert ist, dass die Druckvorrichtung, das Benutzergerät, das Serversystem und ein Tasksystem, das ausgebildet ist, einen von der Druckvorrichtung geforderten benutzer-interaktiven Task, insbesondere ein Übermitteln von auszudruckenden Fotos an die Druckvorrichtung, auszuführen, wie folgt, gesteuert werden:
- die Druckvorrichtung überträgt eine Task-Mitteilung, gemäß der der geforderte Task ausgeführt werden soll, zu dem Serversystem, wonach das Serversystem an die Druckvorrichtung einen ersten Link zum Verbinden des Benutzergeräts mit dem Serversystem übermittelt,
- der erste Link wird von der Druckvorrichtung an das Benutzergerät übermittelt, wonach mittels des ersten Links die zweite Datenverbindung zwischen dem Benutzergerät und dem Serversystem aufgebaut wird,
- nachdem die zweite Datenverbindung zwischen dem Benutzergerät und dem Serversystem aufgebaut worden ist, initiiert das Serversystem einen Aufbau einer dritte Datenverbindung zwischen dem Benutzergerät und dem Tasksystem, wonach diese dritte Datenverbindung aufgebaut wird,
- nachdem die dritte Datenverbindung zwischen dem Benutzergerät und dem Task-system aufgebaut worden ist, wird der benutzer-interaktive Task durch das Tasksystem ausgeführt, wobei für die Interaktion mit dem Benutzer eine Eingabeeinheit und eine Ausgabeeinheit des Benutzergeräts verwendet werden, und
- die Druckobjekte werden durch die Druckvorrichtung in Abhängigkeit von dem Ergebnis der Ausführung des benutzer-interaktiven Tasks gedruckt.

Es wird daher nicht unmittelbar eine Datenverbindung zwischen dem Benutzergerät und dem Tasksystem aufgebaut, sondern zunächst wird eine Datenverbindung zwischen dem Benutzergerät und dem Serversystem aufgebaut. Erst danach initiiert das Serversystem den Aufbau der dritten Datenverbindung zwischen dem Benutzergerät und dem Tasksystem. Durch diesen Zwischenschritt des Aufbauens der zweiten Datenverbindung zwischen dem Benutzergerät und dem Serversystem, kann die Manipulationssicherheit erhöht werden. Insbesondere wird es erschwert, persönliche Daten wie beispielsweise Legitimationsdaten eines Benutzers dadurch zu erlangen, dass das Benutzergerät mit einem Manipulationssystem verbunden wird.

Bevorzugt ist das System so konfiguriert, dass das Serversystem den Aufbau der dritten Datenverbindung initiiert, indem das Serversystem einen zweiten Link zum Verbinden des Benutzergeräts mit dem Tasksystem an das Benutzergerät übermittelt, wonach die dritte Datenverbindung zwischen dem Benutzergerät und dem Tasksystem mittels des übermittelten zweiten Links aufgebaut wird. Der zweite Link wird daher über die zweite Datenverbindung zwischen dem Benutzergerät und dem Serversystem von dem Serversystem zu dem Benutzergerät übermittelt, wobei das Benutzergerät unter Verwendung dieses übermittelten zweiten Links die dritte Datenverbindung zwischen dem Benutzergerät und dem Tasksystem aufbaut. Dadurch, dass der zweite Link zum Aufbauen der dritten Datenverbindung zwischen dem Benutzergerät und dem Tasksystem von dem Serversystem stammt und über die zweite Datenverbindung an das Benutzergerät übermittelt wird, kann die Manipulationssicherheit weiter erhöht werden.

Die Druckobjekte sind bevorzugt Fotos, Dokumente, grafische Darstellungen, et cetera. Die Druckobjekte sind bevorzugt digitale Dateien, also insbesondere Fotodateien oder Dokumentendateien, die Fotodaten bzw. Dokumentendaten beinhalten.

Die Druckvorrichtung umfasst bevorzugt mehrere Komponenten, die ausgebildet sind, die beschriebenen verschiedenen Funktionen auszuführen und die miteinander kommunizieren, wobei alle oder einige dieser Komponenten zu einer Einheit bzw. Station zusammengefasst sein können, sodass dieselbe Einheit bzw. Station die verschiedenen Funktionen ausführen kann. So eine Einheit kann beispielsweise eine Fotostation sein. Die Komponenten können aber auch räumlich verteilt angeordnet sein, also nicht beispielsweise in einem gemeinsamen Gehäuse oder Gestell. So können Komponenten, die das eigentliche Ausdrucken ausführen, in einer ersten Einheit zusammengefasst sein und weitere Komponenten, die die Interaktion mit dem Benutzer bzw. dem Benutzergerät durchführen, in einer zweiten Einheit zusammengefasst sein, wobei die erste Einheit und die zweite Einheit miteinander kommunizieren, um den gesamten Druckprozess zu ermöglichen.

In einer bevorzugten Ausführungsform ist das System so konfiguriert, dass die Übermittlung des ersten Links von der Druckvorrichtung an das Benutzergerät ein Erzeugen eines ersten Codes, der den ersten Link zum Verbinden mit dem Serversystem enthält, und ein Darstellen des ersten Codes und einer Aufforderung an den Benutzer, den ersten Code mittels einer Kamera des Benutzergeräts aufzunehmen, auf einer Ausgabeeinheit der Druckvorrichtung umfasst. Die Ausgabeeinheit der Druckvorrichtung ist bevorzugt ein Display.

Die Druckvorrichtung ist bevorzugt eine Fotostation, wobei die Fotostation konfiguriert ist, Fotos zu drucken, und als Ausgabeeinheit ein Display zum Anzeigen beispielsweise des ersten Codes aufweist. Das Benutzergerät ist bevorzugt ein mobiles Benutzergerät. Es ist insbesondere ein Smartphone, ein Tabletcomputer oder ein Laptop. Die Eingabeeinheit des Benutzergeräts ist beispielsweise ein berührungssensitives Display, eine Tastatur, ein Touchpad, et cetera. Die Ausgabeeinheit des Benutzergeräts ist beispielsweise das berührungssensitive Display oder ein nicht berührungssensitives Display.

Das System umfasst daher beispielsweise eine Fotostation und ein Serversystem, das mit der Fotostation über eine erste Datenverbindung verbunden ist und mit einem Smartphone über eine zweite Datenverbindung verbindbar ist, und das Tasksystem ist bevorzugt ausgebildet, einen von der Fotostation geforderten benutzer-interaktiven Task, insbesondere ein Übermitteln von auszudruckenden Fotos an die Fotostation, auszuführen.

In einer bevorzugten Ausführungsform werden daher die folgenden Schritte durchgeführt:
- die Fotostation überträgt eine Task-Mitteilung, gemäß der der geforderte Task ausgeführt werden soll, zu dem Serversystem, wonach das Serversystem an die Fotostation einen ersten Link zum Verbinden des Smartphones mit dem Serversystem übermittelt,
- die Fotostation erzeugt einen ersten Code, der den ersten Link zum Verbinden mit dem Serversystem enthält, und stellt den ersten Code und eine Aufforderung an einen Benutzer, den ersten Code mittels einer Kamera des Smartphones aufzunehmen, auf dem Display dar,
- nach der Aufnahme des ersten Codes, wird mittels des in dem ersten Code enthaltenen ersten Links die zweite Datenverbindung zwischen dem Smartphone und dem Serversystem aufgebaut,
- nachdem die zweite Datenverbindung zwischen dem Smartphone und dem Serversystem aufgebaut worden ist, übermittelt das Serversystem einen zweiten Link zum Verbinden des Smartphones mit dem Tasksystem an das Smartphone, wonach eine dritte Datenverbindung zwischen dem Smartphone und dem Tasksystem aufgebaut wird,
- nachdem die dritte Datenverbindung zwischen dem Smartphone und dem Tasksystem aufgebaut worden ist, wird der benutzer-interaktive Task durch das Tasksystem ausgeführt, wobei auf dem Smartphone eine Benutzeroberfläche erzeugt wird, um mit dem Benutzer zu interagieren, und
- die Fotos werden an der Fotostation in Abhängigkeit von dem Ergebnis der Ausführung des benutzer-interaktiven Tasks gedruckt.

Der erste Code, der den ersten Link zum Verbinden mit dem Serversystem enthält, ist bevorzugt ein QR-Code. Der erste Code kann aber auch ein anderer eindimensionaler oder zweidimensionaler Code sein, der den ersten Link codiert.

Der QR-Code hat unter anderem den Vorteil, dass er von vielen handelsüblichen Benutzergeräten interpretierbar ist, sodass das Benutzergerät nicht zwingend eine App benötigt, die speziell für das Drucken an beispielsweise der Fotostation ausgebildet ist. Auch andere Arten von Codes könnten als erste Codes verwendet werden, insbesondere Arten von Codes, die keine Anpassung des Benutzergeräts erfordern. Es wird für den ersten Code demnach bevorzugt eine Kodierverfahren verwendet, das das Benutzergerät bereits dekodieren kann.

Es kann vorgesehen sein, dass der erste Code nur den ersten Link zum Verbinden des Benutzergeräts mit dem Serversystem kodiert. Dies kann zu einem reduzierten technischen Aufwand führen, da der erste Code, der beispielsweise ein QR-Code ist, lediglich eine Information kodieren muss, das heißt, lediglich den ersten Link, der beispielsweise eine Short URL ist, zu dem Serversystem. Die zu kodierende Datenmenge ist relativ gering, wodurch der erste Code relativ einfach aufgebaut sein kann und von dem Benutzergerät schneller aufgenommen und dekodiert werden kann.

Der erste Link kann auch auf eine andere Art und Weise von der Druckvorrichtung, insbesondere der Fotostation, an das Benutzergerät, insbesondere das Smartphone, übermittelt werden, also ohne Verwendung des ersten Codes. So kann anstelle der optischen Übertragung mittels Anzeigen des ersten Codes durch die Druckvorrichtung und Aufnehmen des ersten Codes durch eine Kamera des Benutzergeräts, der erste Link auch unkodiert sein oder es kann auch eine andere optische Übertragung verwendet werden. Es ist auch möglich, den ersten Link nicht-optisch zu übertragen, sondern beispielsweise elektromagnetisch. In einer Ausführungsform wird eine Nahfeldkommunikation (NFC), Bluetooth oder eine andere elektromagnetische Übertragungstechnik verwendet.

Das Serversystem ist, wie oben beschrieben, mit der Druckvorrichtung, insbesondere der Fotostation, über eine erste Datenverbindung verbunden. Diese erste Datenverbindung ist bevorzugt eine permanente Datenverbindung und insbesondere eine Websocket-Verbindung. Mit permanenter Datenverbindung ist hier bevorzugt gemeint, dass es nicht erforderlich ist, dass bei jeder Aktion des Serversystems eine vorhergehende Anfrage der Druckvorrichtung erforderlich ist. Nachdem die erste Datenverbindung einmal erzeugt worden ist, kann das Serversystem in dieser offenen Verbindung aktiv werden und beispielweise Daten an die Druckvorrichtung senden, ohne auf eine neue Verbindung der Druckvorrichtung zu warten.

Die erste Datenverbindung zwischen der Druckvorrichtung und dem Serversystem ist bevorzugt eine verschlüsselte Datenverbindung, wobei sich die Druckvorrichtung und das Serversystem bevorzugt gegenseitig kryptografisch authentisieren. Die erste Datenverbindung ist bevorzugt eine Internetverbindung. Sie ist bevorzugt eine verschlüsselte Internetverbindung, also eine Interverbindung, die ein Verschlüsselungsprotokoll verwendet, wie beispielsweise das Transportschichtsicherheit-Protokoll (TLS-Protokoll).

Auch die zweite Datenverbindung zwischen dem Benutzergerät und dem Serversystem ist bevorzugt eine permanente Datenverbindung und insbesondere eine Websocket-Verbindung. Es ist also bevorzugt nicht erforderlich, dass bei jeder Aktion des Serversystems eine vorhergehende Anfrage des Benutzergeräts vorliegt. Nachdem die Datenverbindung einmal erzeugt worden ist, kann das Serversystem in dieser offenen Verbindung aktiv werden und beispielsweise neue Daten an das Benutzergerät senden, ohne auf eine neue Verbindung des Benutzergeräts zu warten.

Der erste Link und/oder der zweite Link sind bevorzugt URLs ("Uniform Resource Locator", in Deutsch "einheitlicher Ressourcenverorter") und insbesondere Kurz-URLs ("Short URL"). Der erste Link und/oder der zweite Link könnten in einer bevorzugten Ausführungsform daher auch als Internetadresse oder Webadresse bezeichnet werden. Die zweite Datenverbindung und die dritte Datenverbindung, die mithilfe des ersten Links bzw. beispielsweise des zweiten Links aufgebaut werden, sind demnach bevorzugt Internetverbindungen.

Nachdem die zweite Datenverbindung zwischen dem Benutzergerät und dem Serversystem aufgebaut worden ist, verwendet das Serversystem bevorzugt eine Webanwendung, die eine grafische Benutzeroberfläche auf dem Benutzergerät erzeugt, um mit dem Benutzer interagieren zu können. Die dritte Datenverbindung zwischen dem Benutzergerät und dem Tasksystem wird bevorzugt verwendet, um es dem Tasksystem zu ermöglichen, eine Webanwendung auf dem Tasksystem zu starten, die auf dem Benutzergerät ebenfalls eine grafische Benutzeroberfläche zur Verfügung stellt, die es dem Benutzer ermöglicht, mit dem Tasksystem zu interagieren.

Das Drucken der Druckobjekte an der Druckvorrichtung hängt von dem Ergebnis der Ausführung des benutzer-interaktiven Tasks ab, wobei diese Abhängigkeit des Druckens von dem Ergebnis der Ausführung des benutzer-interaktiven Tasks natürlich für unterschiedliche Tasks unterschiedlich sein kann. Wenn der Task als Ergebnis eine Auswahl zu druckender Druckobjekte liefert, druckt die Druckvorrichtung ein oder mehrere dieser ausgewählten Druckobjekte. Die Druckobjekte könnten optional vor dem Drucken von dem Benutzer oder auch automatisch geändert werden. So kann die Druckvorrichtung ausgestaltet sein, es dem Benutzer zu ermöglichen, weitere Aktionen bezüglich der ausgewählten Druckobjekte durchzuführen. Beispielsweise kann eine Unterauswahl dieser bereits ausgewählten Druckobjekte durchgeführt werden, die Druckobjekte können bearbeitet werden, beispielsweise indem bei Fotos die Bildqualität händisch oder automatisch verbessert wird, indem die Druckobjekte digital zugeschnitten werden, grafische Elemente zu den Druckobjekten hinzugefügt werden, et cetera. Die Abhängigkeit des Druckens der Druckobjekte von dem Ergebnis der Ausführung des benutzer-interaktiven Tasks kann auch sein, dass das Drucken erst ausgeführt wird, nachdem der benutzer-interaktive Task erfolgreich durchgeführt worden ist. Wenn beispielsweise der benutzer-interaktive Task ein Bezahlvorgang ist, so kann das System so ausgestaltet sein, dass die Druckobjekte erst dann gedruckt werden, wenn der Bezahlvorgang erfolgreich abgeschlossen worden ist.

Die zu druckenden Druckobjekte können, wie oben beispielhaft ausgeführt, in dem Task-system gespeichert sein, wobei die zu druckenden Druckobjekte unter den in dem Task-system gespeicherten Druckobjekte ausgewählt werden können und wobei nach dieser Auswahl die Druckobjekte, gegebenenfalls nach einer weiteren optionalen Bildverarbeitung und/oder Unterauswahl, gedruckt werden. Die zu druckenden Druckobjekte können zusätzlich oder alternativ in einem anderen System gespeichert sein. So können die zu druckenden Druckobjekte beispielsweise auf dem Benutzergerät und/oder dem Serversystem gespeichert sein. Auf jeden Fall, also unabhängig von dem initialen Speicherort der Druckobjekte, werden die zu druckenden Druckobjekte von dem initialen Speicherort auf die Druckvorrichtung übertragen, sodass die Druckvorrichtung die Druckobjekte drucken kann.

Das Tasksystem und/oder das Serversystem sind Computersysteme, die jeweils einen Computer oder mehrere Computer umfassen. Das Tasksystem und/oder das Serversystem können auch Cloud-Computersysteme sein. Das Tasksystem und/oder das Serversystem können auch Untersysteme umfassen. Zum Beispiel können mehrere Untersysteme zusammenwirken, um einen Task auszuführen, wobei die zusammenwirkenden Untersysteme als ein Tasksystem aufgefasst werden können.

Die Druckvorrichtung, insbesondere die Fotostation, umfasst ein oder mehrere Drucker zum Drucken der Druckobjekte, die bevorzugt Fotos sind. Bevorzugt umfasst die Druckvorrichtung ein oder mehrere Thermosublimationsdrucker.

In einer bevorzugten Ausführungsform teilt, nachdem die zweite Datenverbindung zwischen dem Benutzergerät und dem Serversystem aufgebaut worden ist, das Serversystem dies der Druckvorrichtung mit, wonach dem Benutzer mittels einer Ausgabeeinheit der Druckvorrichtung angezeigt wird, dass die zweite Datenverbindung zwischen dem Benutzergerät und dem Serversystem aufgebaut worden ist. Dieses Anzeigen kann optisch beispielsweise mittels eines Displays, eines Lichtsignals durch eine Lichtquelle wie eine lichtemittierende Diode (LED), et cetera und/oder akustisch erfolgen. Dieses Anzeigen kann explizit anzeigen, dass die Verbindung zwischen dem Benutzergerät und dem Serversystem aufgebaut worden ist, oder diese erfolgreiche Verbindungsherstellung implizit anzeigen, indem beispielsweise angezeigt wird, dass jetzt die nächsten Schritte unternommen werden können, wie beispielsweise das Eingeben persönlicher Daten im Rahmen eines Login-Dialogs, oder indem mitgeteilt wird, dass die Eingabe weiterer Daten sicher ist.

Dies ermöglicht es dem Benutzer, nur dann weitere Daten, insbesondere persönliche Daten, mittels das Benutzergeräts in das System einzugeben, wenn ihm von der Druckvorrichtung mitgeteilt worden ist, dass die Verbindung des Benutzergeräts zu dem Serversystem hergestellt worden ist - und damit nicht zu einem Manipulationssystem. Dies kann zu einer weiter erhöhten Manipulationssicherheit führen, da nur das Serversystem und nicht oder nur mit einer sehr geringen Wahrscheinlichkeit ein Manipulationssystem, sowohl mit dem Benutzergerät als auch mit der Druckvorrichtung verbunden sein kann.

Es ist bevorzugt, dass das System so konfiguriert ist, dass auf dem Benutzergerät eine grafische Benutzeroberfläche erzeugt wird, die es dem Benutzer ermöglicht, zu veranlassen, dass eine Mitteilung von dem Benutzergerät zu dem Serversystem übertragen wird, wobei das Serversystem die dritte Datenverbindung erst initiiert, nachdem es diese Mitteilung erhalten hat. In diesem Fall erfordert das Initiieren des Aufbaus der dritten Datenverbindung zusätzlich, dass der Benutzer eine Eingabe in das Benutzergerät getätigt hat und dieses Eingeben über die zweite Datenverbindung zwischen dem Benutzergerät und dem Serversystem dem Serversystem mitgeteilt worden ist. Diese weitere Bedingung für das Aufbauen der dritten Datenverbindung führt zu einer weiteren Erhöhung der Manipulationssicherheit.

Die Ausgabeeinheit der Druckvorrichtung ist bevorzugt ein Display. Es ist weiter bevorzugt, dass das System so konfiguriert ist, dass die Druckvorrichtung einen zweiten Code erzeugt, der insbesondere eine mehrstellige numerische oder alphanumerische Zeichenfolge ist, diesen zu dem Serversystem überträgt und diesen zudem auf dem Display der Druckvorrichtung anzeigt, wobei, nachdem die zweite Datenverbindung zwischen dem Benutzergerät und dem Serversystem aufgebaut worden ist, der zweite Code von dem Serversystem auf das Benutzergerät übertragen wird, wobei die grafische Benutzeroberfläche, die es dem Benutzer ermöglicht, zu veranlassen, dass eine Mitteilung von dem Benutzergerät zu dem Serversystem übertragen wird, auch den zweiten Code anzeigt. Dies kann zu einer weiter erhöhten Manipulationssicherheit führen, insbesondere da es dem Benutzer ermöglicht wird, nur dann zu veranlassen, dass eine Mitteilung von dem Benutzergerät zu dem Serversystem übertragen wird, und/oder nur dann persönliche Daten einzugeben, wenn die beiden gezeigten zweiten Codes übereinstimmen. Auf der Ausgabeeinheit der Druckeinrichtung und/oder der Ausgabeeinheit des Benutzergeräts kann angezeigt werden, dass der Benutzer diese Mitteilung nur dann veranlassen und/oder persönliche Daten nur dann eingeben soll, wenn die beiden zweiten Codes übereinstimmen.

In einem Beispiel ist das System so konfiguriert ist, dass dem Benutzer mittels der Ausgabeeinheit der Druckvorrichtung angezeigt wird, dass die zweite Datenverbindung zwischen dem Benutzergerät und dem Serversystem aufgebaut worden ist, erst nachdem das Serversystem die Mitteilung erhalten hat, die von dem Benutzer über das Benutzergerät veranlasst worden ist, und das Serversystem eine Mitteilung an die Druckvorrichtung gesendet hat, dass das Serversystem eine von dem Benutzer veranlasste Mitteilung erhalten hat. Dies kann dazu führen, dass der Benutzer erst dann beispielsweise persönliche Daten in das Tasksystem eingibt, wenn auch die vom Benutzer veranlasste Mitteilung von dem Benutzergerät zu dem Serversystem gesendet worden ist. Dies kann zu einer weiter erhöhten Manipulationssicherheit führen.

Bevorzugt teilt das Tasksystem nach Ausführung des Tasks den Abschluss des Tasks der Druckvorrichtung und/oder dem Serversystem mit. Wenn der Abschluss des Tasks dem Serversystem mitgeteilt wird, informiert das Serversystem bevorzugt die Druckvorrichtung bezüglich des Abschlusses des Tasks. Durch diese Mitteilung des Abschlusses des Tasks kann der Druckprozess in Abhängigkeit von diesem Abschluss durchgeführt werden. Beispielsweise können die Druckobjekte erst dann gedruckt werden, wenn der erfolgreiche Taskabschluss mitgeteilt worden ist.

In einer Ausführungsform übermittelt das Serversystem, in Antwort auf den Empfang der Task-Mitteilung von der Druckvorrichtung, nur den ersten Link zum Verbinden des Benutzergeräts mit dem Serversystem an die Druckvorrichtung. Es werden insbesondere keine personenbezogenen Daten mit übertragen, wodurch die Datensicherheit weiter erhöht werden kann.

In einer bevorzugten Ausführungsform ist das Tasksystem konfiguriert, eine Legitimations-Benutzerschnittstelle, insbesondere eine grafische Legitimationsoberfläche, auf dem Benutzergerät bereitzustellen, über die sich der Benutzer für die interaktive Ausführung des Tasks legitimieren kann, wobei der Task erst ausgeführt wird, nachdem sich der Benutzer legitimiert hat. Dies kann gewährleisten, dass der Task nur mit berechtigten Personen ausgeführt wird. Zudem können aufgrund der hohen Manipulationssicherheit Legitimationsdaten nicht zweckentfremdet werden. Legitimationsdaten sind beispielsweise Login-Daten wie ein Login-Name und ein Login-Passwort.

Es ist bevorzugt vorgesehen, dass das Tasksystem konfiguriert ist, eine Benutzer-Schnittstelle, insbesondere eine grafische Benutzeroberfläche, auf dem Benutzergerät bereitzustellen, die es dem Benutzer ermöglicht, in dem Tasksystem gespeicherte Druckobjekte auszuwählen, wonach die ausgewählten Druckobjekte von dem Tasksystem auf die Druckvorrichtung übertragen werden, die die ausgewählten Druckobjekte druckt. Die zu druckenden Druckobjekte müssen daher nicht beispielsweise auf dem Benutzergerät und/oder dem Serversystem gespeichert sein. Dies erhöht die Flexibilität bezüglich des Ausdruckens von Druckobjekten durch die Druckvorrichtung für den Benutzer, da das Ausdrucken der Druckobjekte erfolgen kann, unabhängig davon, ob die auszudruckenden Druckobjekte auf dem Benutzergerät, auf dem Serversystem und/oder dem Task-System gespeichert sind.

Die Steuerung des Benutzergeräts und des Serversystems erfolgt bevorzugt mittels einer Webanwendung. Die Druckvorrichtung kann konfiguriert sein, den ersten Code, der insbesondere ein QR-Code ist, derart zu erzeugen, dass er den ersten Link, der insbesondere eine Internetadresse ist, zu dem Serversystem aufweist. Das Benutzergerät kann konfiguriert sein, den ersten Link von dem ersten Code zu extrahieren und beispielsweise die entsprechende Internetadresse aufzurufen, wonach das Serversystem eine Webanwendung startet, die dann auf dem Benutzergerät, beispielsweise ein Smartphone, und dem Serversystem ausgeführt wird. Es ist hierfür nicht erforderlich, eine App auf das Benutzergerät herunterzuladen. Das Benutzergerät benötigt lediglich ein Betriebssystem mit einem Webbrowser, der es ermöglicht, eine Webanwendung zusammen mit dem Serversystem auszuführen. Die technischen Anforderungen an das Benutzergerät für das Drucken beispielsweise an der Fotostation sind daher gering.

Auch die Steuerung des Benutzergeräts und des Tasksystems kann mittels einer Webanwendung erfolgen, wobei das Serversystem an das Benutzergerät den zweiten Link über die zweite Datenverbindung übermittelt, wonach das Benutzergerät beispielsweise die entsprechende Internetadresse aufruft. Das Tasksystem kann dann eine Webanwendung starten, die auf dem Benutzergerät und dem Tasksystem ausgeführt wird. Hierdurch wird die dritte Datenverbindung bereitgestellt, über die der benutzer-interaktive Task ausgeführt werden kann. Auch für die Ausführung dieses Tasks benötigt das Benutzergerät daher lediglich ein Betriebssystem mit einem Webbrowser, der es ermöglicht, eine Webanwendung zusammen mit dem Tasksystem auszuführen. Die technischen Anforderungen an das Benutzergerät auch für das Ausführen des Tasks sind daher gering.

In einer Ausführungsform ist das Tasksystem konfiguriert, eine Liste der ausgewählten Druckobjekte an das Serversystem zu übermitteln. Das Tasksystem kann konfiguriert sein, für die Übertragung der ausgewählten Fotos von dem Tasksystem zu der Druckvorrichtung einen Druckobjekt-Link an das Serversystem zu übertragen, wonach das Serversystem den Druckobjekt-Link an die Druckvorrichtung überträgt, die konfiguriert sein kann, den Druckobjekt-Link zur Erzeugung einer Datenverbindung zwischen der Druckvorrichtung und dem Tasksystem aufzubauen, über die die ausgewählten Druckobjekte von dem Task-system auf die Druckvorrichtung übertragen werden. Bevorzugt wird hierbei für jedes ausgewählte Druckobjekt ein jeweiliger Druckobjekt-Link verwendet wird. Die Druckobjekt-Links sind bevorzugt Internetadressen oder Webadressen, insbesondere URLs. Diese Art der Übertragung der Druckobjekte von dem Tasksystem zu der Druckstation führt zu einer hohen Datensicherheit bezüglich der Übertragung der Druckobjekte und führt damit zu einer weiteren Erhöhung der Datensicherheit bzw. Manipulationssicherheit des Gesamtdruckprozesses.

Die oben genannte Aufgabe wird auch durch eine Druckvorrichtung zum Drucken von Druckobjekten, insbesondere in einem SB-Bereich beispielsweise einer Drogerie, gelöst, wobei die Druckvorrichtung ausgebildet ist, als Druckvorrichtung des Systems gemäß einem der Ansprüche 1 bis 12 verwendet zu werden.

Die oben genannte Aufgabe wird zudem durch ein Serversystem zur Kommunikation mit a) der Druckvorrichtung zum Drucken von Druckobjekten, insbesondere in einem SB-Bereich beispielsweise einer Drogerie, und b) dem Benutzergerät gelöst, wobei das Serversystem ausgebildet ist, als Serversystem des Systems gemäß einem der Ansprüche 1 bis 12 verwendet zu werden.

Des Weiteren wird die oben genannte Aufgabe durch ein Verfahren zum Drucken von Druckobjekten durch eine Druckvorrichtung, insbesondere in einem SB-Bereich beispielsweise einer Drogerie, mittels eines Systems gemäß einem der Ansprüche 1 bis 12 gelöst, wobei das Verfahren umfasst:
- Übertragung einer Task-Mitteilung, gemäß der ein geforderter Task ausgeführt werden soll, über eine erste Datenverbindung von der Druckvorrichtung zu einem Serversystem, wonach das Serversystem an die Druckvorrichtung einen ersten Link zum Verbinden eines Benutzergeräts mit dem Serversystem übermittelt,
- Übermittlung des ersten Links von der Druckvorrichtung an das Benutzergerät, wonach mittels des ersten Links die zweite Datenverbindung zwischen dem Benutzergerät und dem Serversystem aufgebaut wird,
- Initiieren eines Aufbaus einer dritten Datenverbindung zwischen dem Benutzergerät und dem Tasksystem durch das Serversystem, wonach diese dritte Datenverbindung aufgebaut wird,
- Ausführen des benutzer-interaktiven Tasks durch das Tasksystem, wobei für die Interaktion mit dem Benutzer eine Eingabeeinheit und eine Ausgabeeinheit des Benutzergeräts verwendet werden, und
- Drucken der Druckobjekte durch der Druckvorrichtung in Abhängigkeit von dem Ergebnis der Ausführung des benutzer-interaktiven Tasks.

Außerdem wird die oben genannte Aufgabe durch ein Computerprogramm zum Drucken von Druckobjekten durch eine Druckvorrichtung, insbesondere in einem SB-Bereich beispielsweise einer Drogerie, gelöst, wobei das Computerprogramm Programmcodemittel aufweist, die angepasst sind, ein System zum Drucken von Druckobjekten durch eine Druckvorrichtung gemäß einem der Ansprüche 1 bis 12, das Benutzergerät und das Task-system derart zu steuern, dass das Verfahren zum Drucken von Druckobjekten gemäß Anspruch 15 durchgeführt wird, wenn das Computerprogramm auf dem System, dem Benutzergerät und das Tasksystem ausgeführt wird.

Das Computerprogramm umfasst bevorzugt mehrere Unter-Computerprogramme, die interagieren, um die Verfahrensschritte durchzuführen. So umfasst das Computerprogramm beispielsweise bevorzugt die oben beschriebenen Webanwendungen, die bevorzugt auf dem Benutzergerät, dem Serversystem und/oder dem Tasksystem ausgeführt werden. Zudem kann das Computerprogramm weitere Unterprogramme aufweisen, die auf der Fotostation und/oder dem Serversystem und/oder dem Tasksystem ausgeführt werden.

Es sollte verstanden werden, dass das System zum Drucken von Druckobjekten nach Anspruch 1, die Druckvorrichtung gemäß Anspruch 13, das Serversystem gemäß Anspruch 14, das Verfahren zum Drucken von Fotos nach Anspruch 15 und das Computerprogramm zum Drucken von Fotos nach Anspruch 16 ähnliche oder identische Ausführungsformen aufweisen, wie sie insbesondere in den abhängigen Ansprüchen definiert sind.

Im Weiteren werden Ausführungsformen der Erfindung unter Bezugnahme auf nachfolgende Figuren beschrieben, wobei
- Fig.1: schematisch und exemplarisch einen Benutzer mit einem Smartphone vor einer Fotostation zum Drucken von Fotos zeigt,
- Fig. 2: schematisch und exemplarisch eine Ausführungsform eines Systems zum Drucken von Fotos durch eine Fotostation zusammen mit dem Smartphone und einem Tasksystem zeigt,
- Fig. 3: schematisch und exemplarisch Komponenten einer Ausführungsform der Fotostation zeigt,
- Fig. 4: schematisch und exemplarisch zeigt, wie in einer Ausführungsform die Fotostation, das Serversystem, das Smartphone und das Tasksystem zusammen betrieben werden, um einen benutzer-interaktiven Task ausführen,
- Fig. 5: schematisch und exemplarisch eine grafische Benutzeroberfläche mit einem kodierten ersten Link zum Verbinden des Smartphones mit dem Serversystem auf einem Display der Fotostation zeigt,
- Fig. 6: schematisch und exemplarisch eine grafische Benutzeroberfläche einer Webanwendung, die auf dem Serversystem ausgeführt wird, auf einem Display des Smartphones zeigt,
- Fig. 7: schematisch und exemplarisch eine Mitteilung für den Benutzer, dass die Datenverbindung zwischen dem Smartphone und dem Serversystem sicher ist, auf dem Display der Fotostation zeigt,
- Fig. 8: schematisch und exemplarisch eine grafische Benutzeroberfläche einer Webanwendung, die auf dem Serversystem ausgeführt wird und mit der der Benutzer ein Tasksystem, in dem Fotos gespeichert sind, auswählen kann, auf dem Display des Smartphones zeigt,
- Fig. 9: schematisch und exemplarisch eine Legitimationsoberfläche einer Webanwendung, die auf dem Tasksystem ausgeführt wird und mit der sich der Benutzer gegenüber dem Tasksystem legitimieren kann, auf dem Display des Smartphones zeigt,
- Fig. 10: schematisch und exemplarisch eine grafische Benutzeroberfläche einer Webanwendung, die auf dem Tasksystem ausgeführt wird und mit der der Benutzer in dem Tasksystem gespeicherte Fotos auswählen kann, auf dem Display des Smartphones zeigt,
- Fig. 11: schematisch und exemplarisch eine Mitteilung für den Benutzer, dass die ausgewählten Fotos von dem Tasksystem auf die Fotostation übertragen worden sind, auf dem Display der Fotostation zeigt,
- Fig. 12: schematisch und exemplarisch zeigt, wie in einer weiteren Ausführungsform die Fotostation, das Serversystem, das Smartphone und ein anderes Tasksystem zusammen betrieben werden, um einen benutzer-interaktiven anderen Task ausführen,
- Fig. 13: schematisch und exemplarisch eine grafische Benutzeroberfläche mit einem kodierten ersten Link zum Verbinden des Smartphones mit dem Serversystem und einem numerischen Code auf einem Display der Fotostation zeigt,
- Fig. 14: schematisch und exemplarisch eine grafische Benutzeroberfläche einer Webanwendung, die auf dem Serversystem ausgeführt wird und den numerischen Code darstellt, auf einem Display des Smartphones zeigt,
- Fig. 15: schematisch und exemplarisch eine Mitteilung für den Benutzer, dass die Datenverbindung zwischen dem Smartphone und dem Serversystem sicher ist, auf dem Display der Fotostation zeigt,
- Fig. 16: schematisch und exemplarisch eine grafische Benutzeroberfläche einer Webanwendung, die auf dem Tasksystem ausgeführt wird und mit der der Benutzer ein Bezahlverfahren auswählen kann, auf dem Display des Smartphones zeigt,
- Fig. 17: schematisch und exemplarisch eine Legitimationsoberfläche einer Webanwendung, die auf dem Tasksystem ausgeführt wird und mit der sich der Benutzer gegenüber dem Tasksystem legitimieren kann, auf dem Display des Smartphones zeigt,
- Fig. 18: schematisch und exemplarisch eine Mitteilung für den Benutzer, dass der Druck der Fotos in Kürze startet, auf dem Display der Fotostation zeigt, und
- Fig. 19: ein Ablaufdiagramm zeigt, das eine weitere Ausführungsform eines Verfahrens zum Drucken von Fotos, die auf einem Smartphone mit Kamera gespeichert sind, an einer Fotostation illustriert.

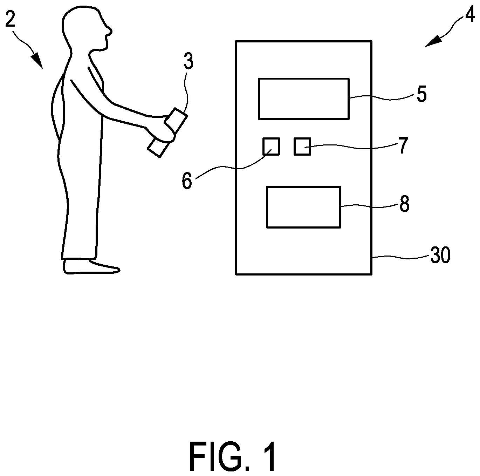

Fig. 1 zeigt schematisch und beispielhaft einen Benutzer 2 mit einem Smartphone 3, der vor einer Fotostation 4 steht. Das Benutzergerät ist also hier beispielhaft ein Smartphone 3 und die Druckvorrichtung ist hier beispielhaft eine Fotostation 4.

Die Fotostation 4 umfasst ein Display 5, einen Scanner 6, Anschlussmöglichkeiten 7 für das Smartphone 3, insbesondere Verbindungskabel, und eine Druckausgabe 8, an der die Person 2 gedruckte Fotos entnehmen kann. Innerhalb des Gehäuses 30 der Fotostation 4 befinden sich zudem mehrere Thermosublimationsdrucker, um beispielsweise ein Bedrucken von Aufklebern und auch ein Erzeugen "normaler" Fotos zu ermöglichen, und ein Steuerungscomputer, der das Display 5, den Scanner 6 und die Drucker steuert. Der Steuerungscomputer kann über die Anschlussmöglichkeiten 7 mit dem Smartphone 3 verbunden werden, um Fotos, die auf dem Smartphone 3 gespeichert sein können, von dem Smartphone 3 auf die Fotostation 4 zu übertragen. In diesem Beispiel ist das Display 5 zudem ein Touchscreen, auf dem die auf die Fotostation 4 übertragenen Fotos angezeigt werden können, so dass die Person 2 auf diesem Touchscreen 5 zu druckende Fotos auswählen kann und auch bestimmen kann, wie die ausgewählten Fotos gedruckt werden sollen. Die Person 2 kann beispielsweise bestimmen, ob die ausgewählten Fotos als normale Fotos gedruckt werden sollten oder als Aufkleber.

Die Fotostation 4 kann aber auch ausgebildet sein, Fotos auszudrucken, die nicht auf dem Smartphone gespeichert sind. Beispielsweise können in einer Ausführungsform Fotos ausgedruckt werden, die in einem Tasksystem eines Fotodienstleisters wie beispielsweise in einer Foto-Cloud gespeichert sind. Dies wird im Folgenden erläutert.

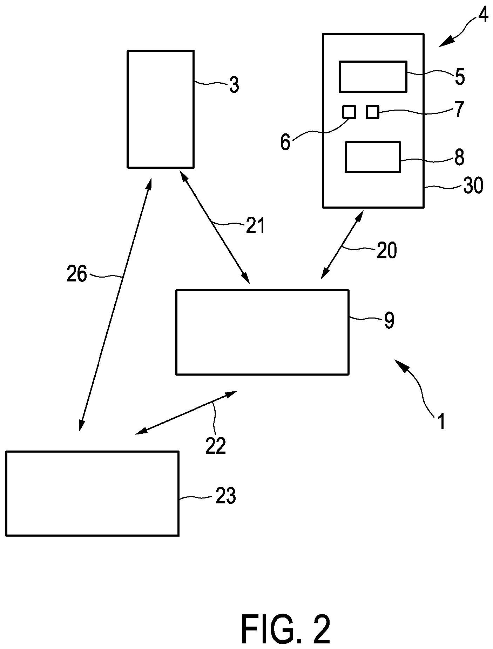

Fig. 2 zeigt schematisch und beispielhaft ein entsprechendes System zum Drucken von Fotos an der Fotostation 4, die insbesondere in einem SB-Bereich einer Drogerie aufgestellt ist. Das System 1 umfasst ein Serversystem 9, das mit der Fotostation 4 über eine erste Datenverbindung 20 verbunden ist und das mit dem Smartphone 3 über eine zweite Datenverbindung 21 verbindbar ist. Das System 1 ist so konfiguriert, dass die Fotostation 4, das Smartphone 3, das Serversystem 9 und das Tasksystem 23, wie unten beschrieben, gesteuert werden.

Das Tasksystem 23 ist ausgebildet, einen von der Fotostation 4 geforderten benutzer-interaktiven Task auszuführen. In dieser Ausführungsform ist der benutzer-interaktive Task ein Übermitteln von auszudruckenden Fotos von dem Tasksystem 23 an die Fotostation 4, die schließlich die übermittelten Fotos druckt. In einer anderen Ausführungsform kann das Tasksystem ausgebildet sein, einen anderen von der Fotostation 4 geforderten benutzer-interaktiven Task auszuführen. Insbesondere kann das Serversystem 9 so ausgebildet sein, dass die Fotostation, das Serversystem und das Smartphone mit unterschiedlichen Tasksystemen zusammenarbeiten, wobei das jeweilige Tasksystem insbesondere abhängig ist von dem jeweiligen von der Fotostation gewünschten benutzer-interaktiven Task.

In einer Ausführungsform ist keine direkte Verbindung zwischen dem Smartphone 3 und der Fotostation 4 erforderlich, um die Fotos zu drucken. Die Fotostation 4 kann daher auch so ausgestaltet sein, dass sie keine Möglichkeiten bietet, direkt mit dem Smartphone 3 verbunden zu werden.

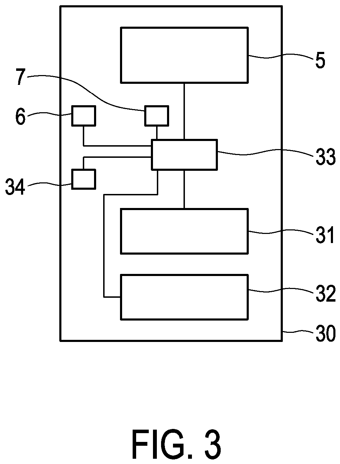

Wie in Fig. 3 schematisch und beispielhaft dargestellt ist, befinden sich innerhalb des Gehäuses 30 der Fotostation 4 zwei Drucker 31, 32 zum Drucken von Aufklebern und von normalen Fotos und ein Steuerungscomputer 33 zum Steuern der Drucker 31, 32, des Displays 5 und des Scanners 6. Der Steuerungscomputer 33 kann mit dem Serversystem 9 über einen Datenverbindungsanschluss 34 verbunden werden. In einer anderen Ausführungsform kann die Fotostation 4 auch nur einen Drucker oder mehr als zwei Drucker aufweisen.

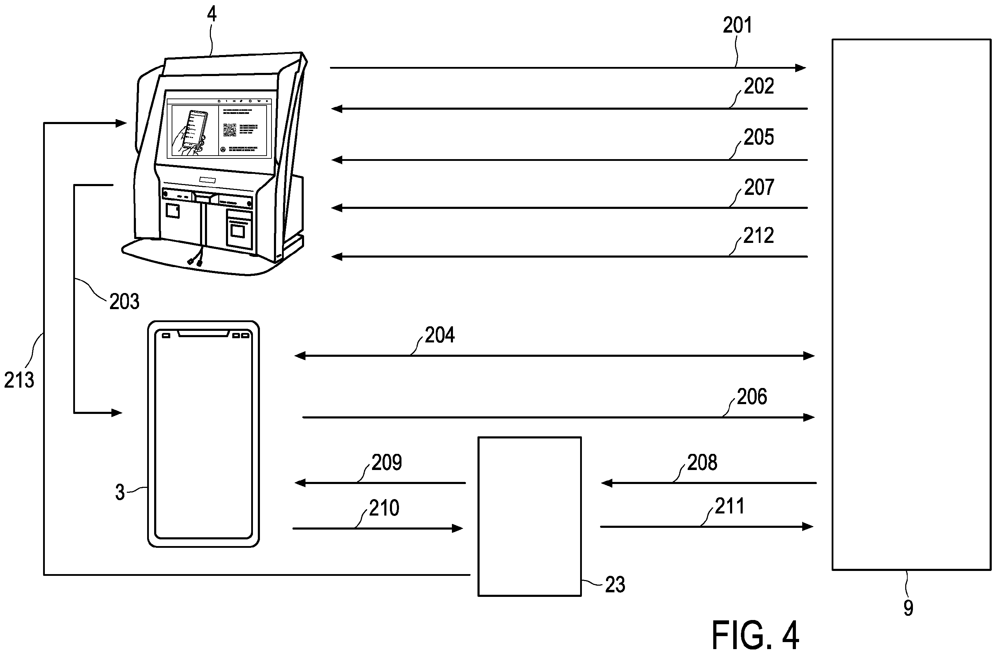

Die Fotostation 4 ist konfiguriert, eine Task-Mitteilung, gemäß der ein geforderter Task ausgeführt werden soll, zu dem Serversystem 9 zu übertragen, wonach das Serversystem 9 an die Fotostation 4 einen ersten Link zum Verbinden des Smartphones 3 mit dem Serversystem 9 übermittelt. Das Übertragen der Task-Mitteilung ist in Fig. 4 durch den Pfeil 201 symbolisiert, wobei der Task darin besteht, es dem Benutzer 2 zu ermöglichen, Fotos auszuwählen. Dieser erste Link ist in diesem Ausführungsbeispiel eine Kurz-URL, die von dem Serversystem 9 an die Fotostation 4 übermittelt wird. Dies wird in Fig. 4 durch den Pfeil 202 symbolisiert.

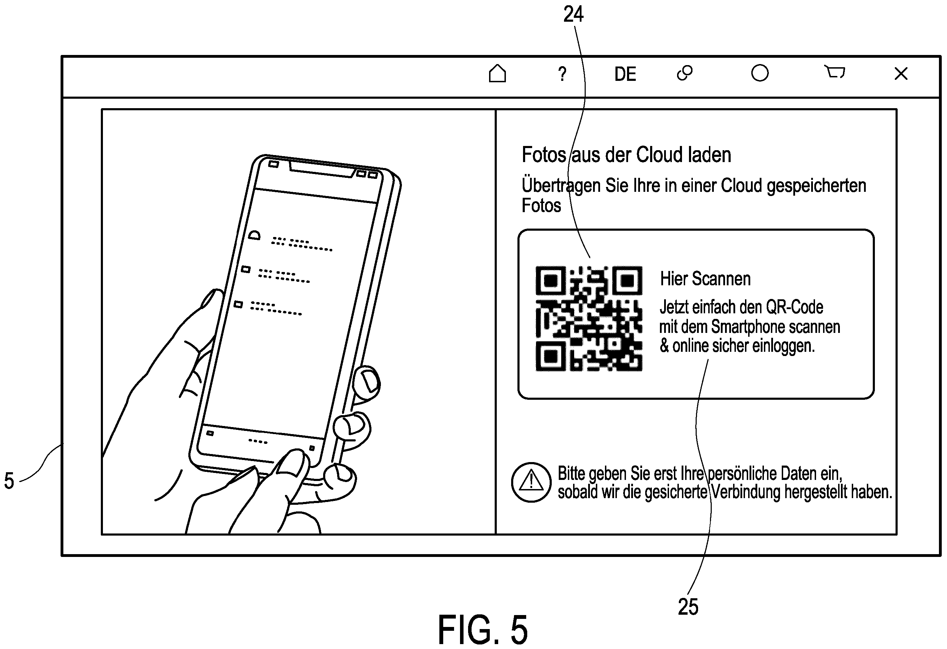

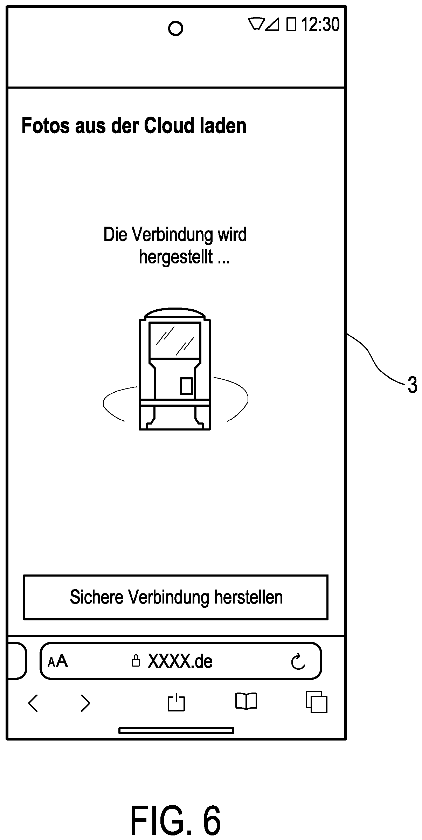

Die Fotostation 4 erzeugt dann einen ersten Code 24 der den ersten Link zum Verbinden mit dem Serversystem 9 enthält, und stellt den ersten Code 24 und eine Aufforderung 25 an den Benutzer 2, den ersten Code 24 mittels einer Kamera des Smartphones 3 aufzunehmen, auf dem Display 5 dar. In dieser Ausführungsform ist der erste Code 24 ein QR-Code. Ein entsprechender QR-Code 24 mit der Aufforderung 25 auf dem Display 5 der Fotostation 4 ist schematisch und beispielhaft in Fig. 5 illustriert. In Fig. 3 wird dieser Schritt durch den Pfeil 203 symbolisiert. Nach der Aufnahme des ersten Codes 24 wird mittels des in dem ersten Code 24 enthaltenen ersten Links die zweite Datenverbindung 21 zwischen dem Smartphone 3 und dem Serversystem 9 aufgebaut, wobei eine Webanwendung auf dem Serversystem 9 gestartet wird, die eine grafische Benutzeroberfläche auf dem Smartphone 3 erzeugt. Dies wird in Fig. 4 durch den Pfeil 204 symbolisiert. Die graphische Benutzeroberfläche ist beispielhaft in Fig. 6 gezeigt. Es wird dann von dem Serversystem 9 eine Mitteilung an die Fotostation 4 übermittelt, gemäß der die Verbindung zwischen dem Smartphone 3 und dem Serversystem 9 aufgebaut worden ist (Pfeil 205 in Fig. 4). In dieser Ausführungsform ist diese Mitteilung eine Websocket-Mitteilung.

Die grafische Benutzeroberfläche auf dem Smartphone 3 kann auch einen Button umfassen, den der Benutzer 2 betätigen kann, um zu signalisieren, dass der Benutzer 2 eine sichere Verbindung für den jeweiligen Task, der hier ein Auswählen von Fotos auf dem Tasksystem 23 ist, wünscht. Mit anderen Worten, mit dem Betätigen des Buttons kann der Benutzer 2 bestätigen, dass eine Verbindung zu dem Tasksystem 23 gewünscht ist, wonach auf der grafischen Benutzeroberfläche angezeigt wird, dass diese Verbindung hergestellt wird. Diese Anzeige und der Button sind ebenfalls in Fig. 6 dargestellt. Das Betätigen des Buttons wird dem Serversystem 9 mitgeteilt (Pfeil 206), wobei die entsprechende von dem Smartphone 3 an das Serversystem 9 übermittelte Mitteilung eine von dem Benutzer 2 veranlasste Mitteilung ist. Danach informiert das Serversystem 9 die Fotostation 4, dass eine vom Benutzer veranlasste Mitteilung von dem Smartphone 3 an das Serversystem 9 geschickt worden ist (Pfeil 207). Diese Mitteilung von dem Serversystem 9 zu der Fotostation 4 ist bevorzugt auch eine Websocket-Mitteilung.

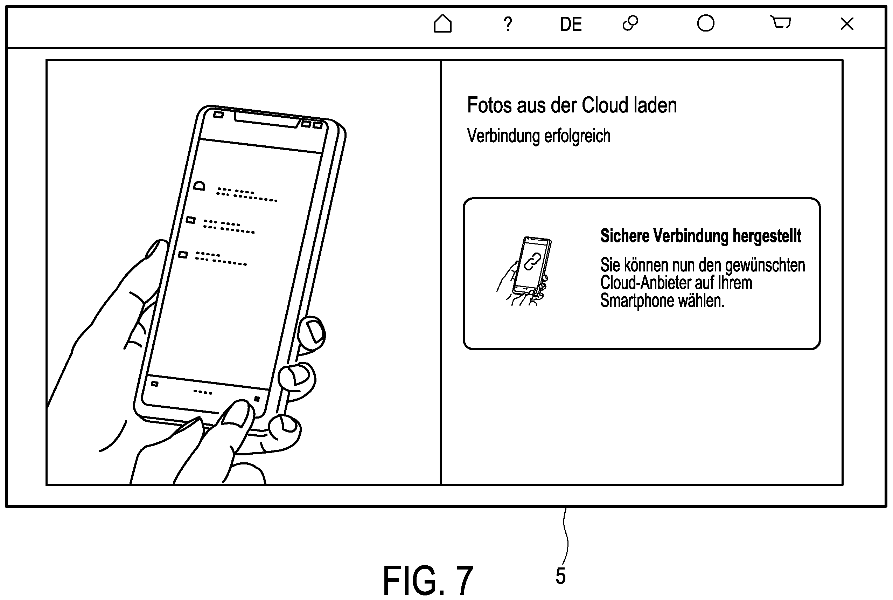

Nachdem die Fotostation 4 die Mitteilung von dem Serversystem 9 erhalten hat, dass eine von dem Benutzer veranlasste Mitteilung von dem Smartphone 3 an das Serversystem 9 geschickt worden ist und damit bestätigt worden ist, dass die Verbindung zwischen dem Smartphone 3 und dem Serversystem 9 aufgebaut worden ist, wird dies dem Benutzer 2 auf dem Display 5 der Fotostation 4 angezeigt. Dies ist beispielhaft in Fig. 7 illustriert. Nachdem der Benutzer 2 diese Mitteilung der Verbindung des Smartphones 3 zu dem Serversystem 9 und damit nicht zu einem Manipulationssystem auf der Fotostation 4 gesehen hat, ist die Wahrscheinlichkeit sehr hoch, dass seine nachfolgend von ihm eingegebenen persönlichen Daten sicher sind.

Nachdem die zweite Datenverbindung 21, zwischen dem Smartphone 3 und dem Serversystem 9 aufgebaut worden ist, übermittelt das Serversystem 9 einen zweiten Link zum Verbinden des Smartphones 3 mit dem Tasksystem 23 an das Smartphone 3, wonach eine dritte Datenverbindung 26 zwischen dem Smartphone 3 und dem Tasksystem 23 aufgebaut wird. Das Serversystem 9 initiiert also die dritte Datenverbindung. Der zweite Link ist bevorzugt eine URL, die verwendet wird, um das Smartphone 3 mit dem Tasksystem 23 zu verbinden. Das Tasksystem 23 ist dabei, wie oben bereits erwähnt, bevorzugt ein Foto-Cloud-System.

Das Serversystem 9 kann die dritte Datenverbindung zwischen dem Smartphone 3 und dem Tasksystem 23 auch auf eine andere Art initiieren. Das im vorhergehenden Absatz beschriebene Initiieren der dritten Datenverbindung und auch andere Arten dieses Initiierens oder auch Erzeugens der dritten Datenverbindung sind in Fig. 4 durch den Pfeil 208 symbolisiert.

Das Serversystem 9 kann ausgebildet sein, es dem Benutzer 2 zu ermöglichen, ein bestimmtes Tasksystem aus einer Gruppe von Tasksystemen auszuwählen, wonach das

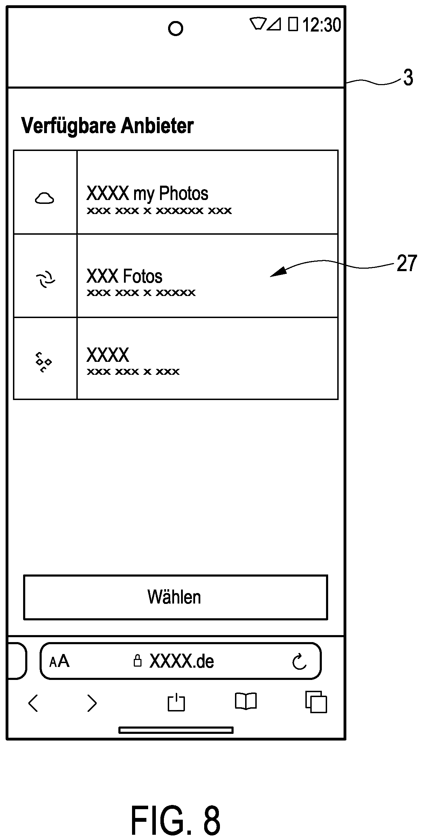

Serversystem 9 dem Smartphone 3 genau den zweiten Link übermittelt, der dazu verwendet werden kann, das Smartphone 3 mit dem zuvor ausgewählten Tasksystem zu verbinden. Beispielsweise kann die auf dem Serversystem 9 ausgeführte Webanwendung auf dem Smartphone 3 eine grafische Benutzeroberfläche 27 darstellen, die es dem Benutzer 2 ermöglicht, ein gewünschtes Tasksystem auszuwählen. Dies ist beispielhaft in Fig. 8 illustriert. Indem in Fig. 8 gezeigten Beispiel kann der Benutzer 2 ein Tasksystem eines gewünschten Fotodienstleisters auswählen, wonach das Serversystem 9 dem Smartphone 3 genau den zweiten Link übermittelt, der zu einer Verbindung zwischen dem Smartphone 3 und dem gewählten Tasksystem 23 führt.

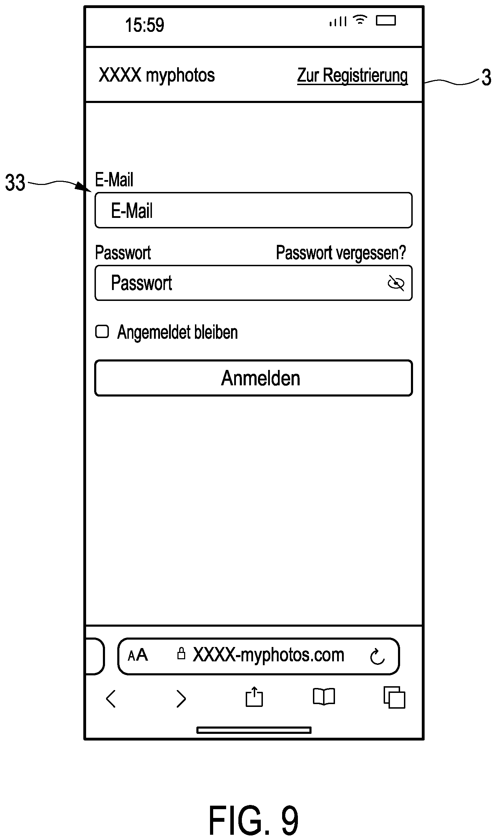

Nachdem die dritte Datenverbindung 26 zwischen dem Smartphone 3 und dem Tasksystem 23 aufgebaut worden ist, wird der benutzer-interaktive Task durch das Tasksystem 23 ausgeführt, wobei auf dem Smartphone 3 eine Benutzeroberfläche erzeugt wird, um mit dem Benutzer 2 zu interagieren. Das Tasksystem 23 ist dabei bevorzugt so konfiguriert, dass zunächst auf dem Smartphone 3 eine Legitimationsoberfläche 33 bereitgestellt wird, über die sich der Benutzer 2 für die interaktive Ausführung des Tasks legitimieren kann, wobei der Task erst ausgeführt wird, nachdem sich der Benutzer 2 legitimiert hat. In Fig. 4 wird diese Legitimierung durch den Pfeil 209 symbolisiert. Eine entsprechende grafische Legitimationsoberfläche 33 auf dem Smartphone 3 ist beispielhaft in Fig. 9 gezeigt. In diesem Beispiel kann sich der Benutzer 2 legitimieren, indem er seine E-Mail-Adresse und sein Passwort eingibt.

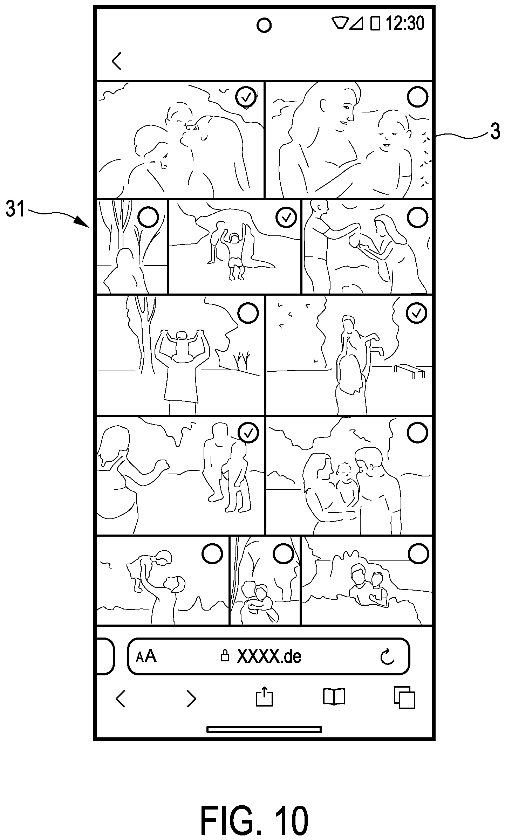

Nachdem sich der Benutzer 2 legitimiert hat, stellt das Tasksystem 23 eine weitere grafische Benutzeroberfläche 31 auf dem Smartphone 3 zur Verfügung, die es dem Benutzer 2 ermöglicht, in dem Tasksystem 23 gespeicherte Fotos auszuwählen, wonach die ausgewählten Fotos von dem Tasksystem 23 auf die Fotostation 4 übertragen werden. Dieses Auswählen der auszudruckenden Fotos und das Übermitteln dieser Information von dem Smartphone 3 an das Tasksystem 23 ist in Fig. 4 durch den Pfeil 210 symbolisiert. Die grafische Benutzeroberfläche 31 zum Auswählen der zu druckenden Fotos auf dem Smartphone 3 ist beispielhaft in Fig. 10 gezeigt.

Das Tasksystem 23 ist zudem konfiguriert, eine Liste der ausgewählten Fotos an das Serversystem 9 über eine Datenverbindung 22 zu übermitteln (Pfeil 211 in Fig. 4). Das Serversystem 9 teilt daraufhin der Fotostation 4 die ausgewählten Fotos mit (Pfeil 212 in Fig. 4), wobei auch diese Mitteilung von dem Serversystem 9 an die Fotostation 4 bevorzugt eine Websocket-Mitteilung ist. Die Fotostation 4 lädt dann die ausgewählten Fotos von dem Tasksystem 23 über eine weitere Datenverbindung zwischen der Fotostation 4 und dem Tasksystem 23 herunter (Pfeil 213 in Fig. 4). In dieser Ausführungsform gibt es demnach zusätzlich zwischen den in Fig. 2 gezeigten Datenverbindungen eine weitere Datenverbindung zwischen der Fotostation 4 und dem Tasksystem 23, die es ermöglicht, dass die ausgewählten Fotos von dem Tasksystem 23 auf die Fotostation 4 übertragen werden.

In einer bevorzugten Ausführungsform überträgt das Tasksystem 23 an das Serversystem 9 auch Links zu den ausgewählten Fotos, die im Folgenden als Foto-Links oder allgemeiner als Druckobjekt-Links bezeichnet werden. Das Serversystem 9 überträgt dann die Druckobjekt-Links an die Fotostation 4, die konfiguriert ist, die Druckobjekt-Links zur Erzeugung einer Datenverbindung zwischen der Druckvorrichtung 4 und dem Tasksystem 23 zu verwenden, über die die ausgewählten Fotos von dem Tasksystem 23 auf die Fotostation 4 übertragen werden. In dieser Ausführungsform wird für jedes ausgewählte Foto ein jeweiliger Druckobjekt-Link verwendet. Die Links sind bevorzugt Internetadressen bzw. Webadressen, insbesondere URLs.

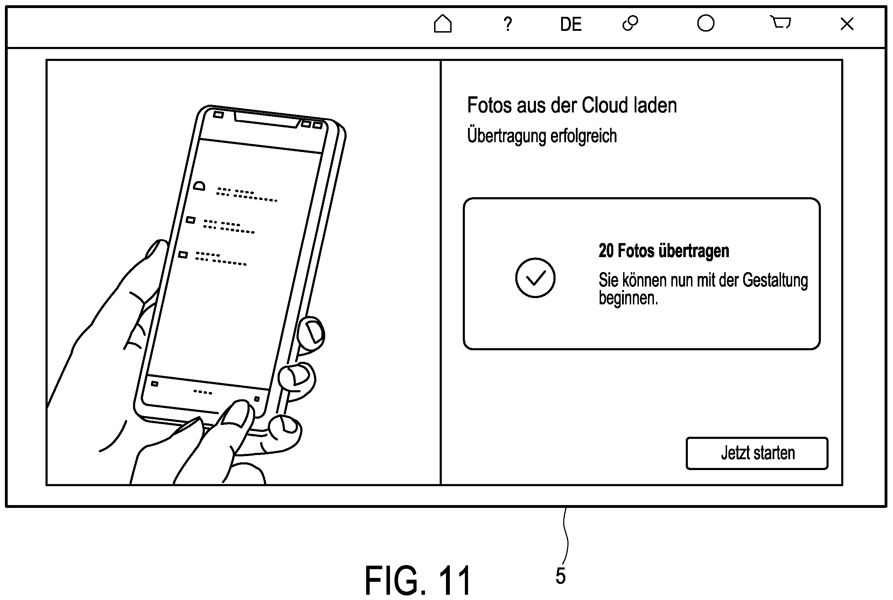

Nachdem die Fotos auf die Fotostation 4 übertragen worden sind, wird dies auf dem Display 5 der Fotostation 4 angezeigt, wie es beispielhaft in Fig. 11 dargestellt ist. Der Benutzer 2 kann danach die ausgewählten Fotos direkt an der Fotostation 4 drucken lassen oder zunächst gestalten, d.h. bearbeiten, wonach die gestalteten Fotos ausgedruckt werden. Die Fotostation 4 kann auch ausgebildet sein, es dem Benutzer 2 zu ermöglichen, eine Unterauswahl der übertragenen Fotos zu treffen, wonach die im Rahmen dieser Unterauswahl ausgewählten Fotos, gegebenenfalls nach einer Gestaltung bzw. Bearbeitung durch den Benutzer 2, ausgedruckt werden. Die Fotostation 4 kann auch ausgebildet sein, die auszudruckenden Fotos automatisch zu bearbeiten, indem sie beispielsweise die auszudruckenden Fotos automatisch korrigiert bzw. optimiert.

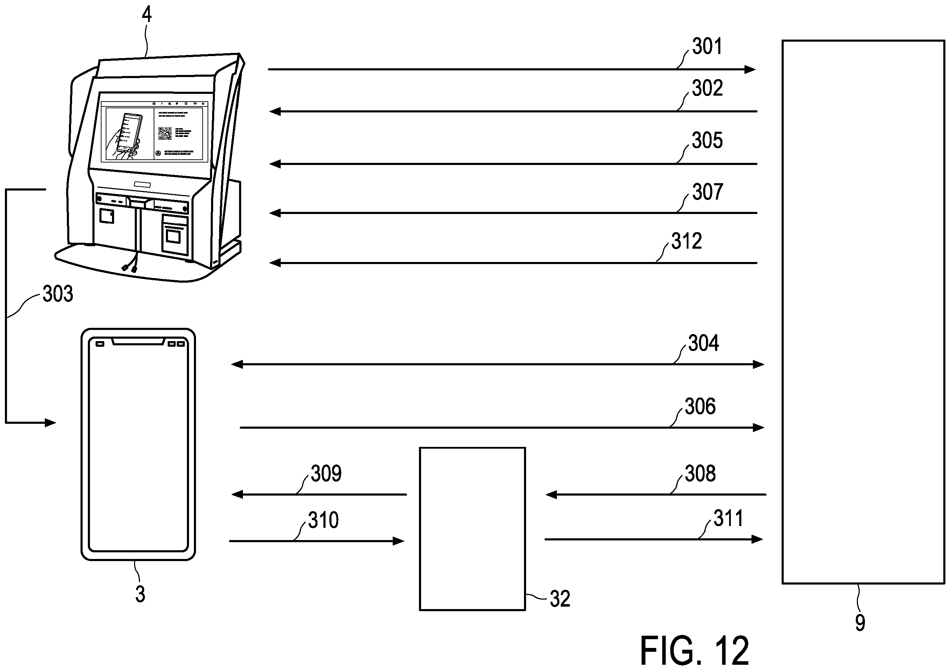

Fig. 12 zeigt schematisch und beispielhaft das System, das die Fotostation 4 und das Serversystem 9 umfasst, mit einem anderen Tasksystem 32. Dieses Tasksystem 32 ist ausgebildet, einen Bezahlvorgang durchzuführen.

Die Fotostation 4 erzeugt einen zweiten Code 29, der insbesondere eine mehrstellige numerische oder alphanumerische Zeichenfolge ist, und überträgt diesen zusammen mit einer Task-Mitteilung, gemäß der ein geforderter Task ausgeführt werden soll, an das Serversystem 9 (Pfeil 301 in Fig. 12), wobei die Fotostation 4 diesen zweiten Code 29 auch auf dem Display 5 der Fotostation 4 zeigt. Das Serversystem 9 übermittelt dann an die Fotostation 4 einen ersten Link zum Verbinden des Smartphones 3 mit dem Serversystem 9 (Pfeil 302 in Fig. 12). In diesem Ausführungsbeispiel ist die Task-Mitteilung eine Mitteilung, einen Bezahlprozess durchzuführen. Der erste Link ist auch in dieser Ausführungsform bevorzugt eine Kurz- URL.

Die Fotostation 4 erzeugt dann, wie auch in dem Ausführungsbeispiel, das in Fig. 4 gezeigt ist, einen ersten Code 24, der bevorzugt ein QR-Code ist und den ersten Link zum Verbinden mit dem Serversystem 9 aufweist. Der erste Code 24 und eine Aufforderung 25 an einen Benutzer 2, den ersten Code 24 mittels einer Kamera des Smartphones 3 aufzunehmen, wird dann auf dem Display 5 dargestellt. Das Aufnehmen des ersten Codes 24 mittels der Kamera des Smartphones 3 ist in Fig. 12 durch den Pfeil 303 symbolisiert.

Nach der Aufnahme des ersten Codes 24 mittels der Kamera des Smartphones 3 wird der in dem ersten Code 24 enthaltene erste Link verwendet, um die zweite Datenverbindung 21 zwischen dem Smartphone 3 und dem Serversystem 9 aufzubauen. In dieser Ausführungsform wird auf dem Serversystem 9 eine Webanwendung ausgeführt, die auf dem Smartphone eine grafische Benutzeroberfläche anzeigt, die insbesondere den zweiten Code 29 darstellt (Pfeil 304 in Fig. 12). Nachdem also die zweite Datenverbindung 21 zwischen dem Smartphone 3 und dem Serversystem 9 aufgebaut worden ist, wird der zweite Code 29 von dem Serversystem 9 auf das Smartphone 3 übertragen, das den übertragenen zweiten Code 29 auf dem Display des Smartphones 3 anzeigt. Zudem teilt das Serversystem 9 der Fotostation 4 mit, dass die zweite Datenverbindung 21 zwischen dem Smartphone 3 und dem Serversystem 9 aufgebaut worden ist (Pfeil 305 in Fig. 12). Auch diese Mitteilung ist bevorzugt eine Websocket-Mitteilung.

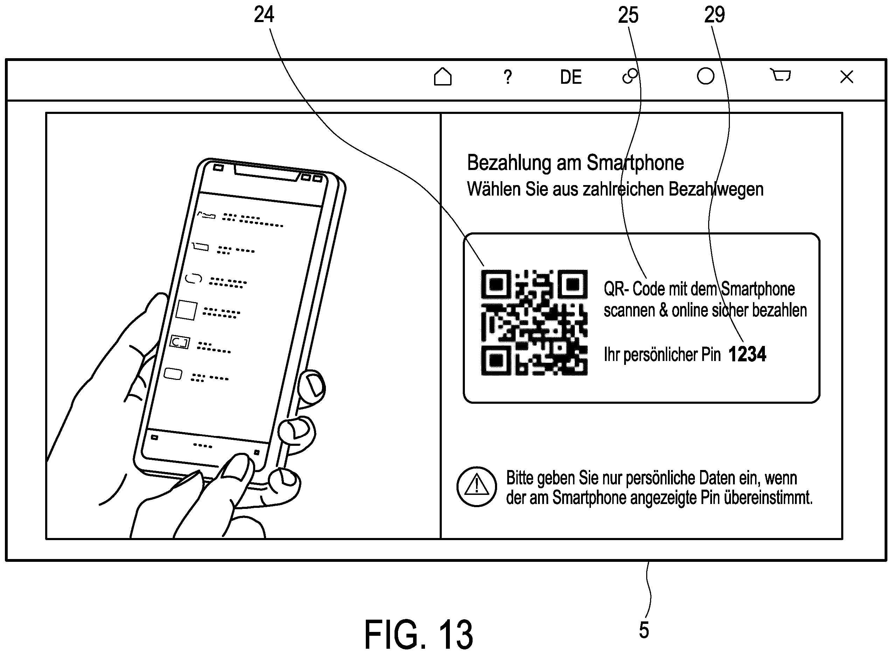

Gleichzeitig wird auf dem Display des Smartphones 3 und/oder auf dem Display 5 der Fotostation 4 der Benutzer 2 darüber informiert, dass persönliche Daten nur eingegeben werden sollten, wenn der auf dem Display des Smartphones 3 angezeigte zweite Code 29 und der auf dem Display 5 der Fotostation 4 gezeigte zweite Code 29 übereinstimmen. Fig. 13 zeigt beispielhaft eine entsprechende Information auf dem Display 5 der Fotostation 4.

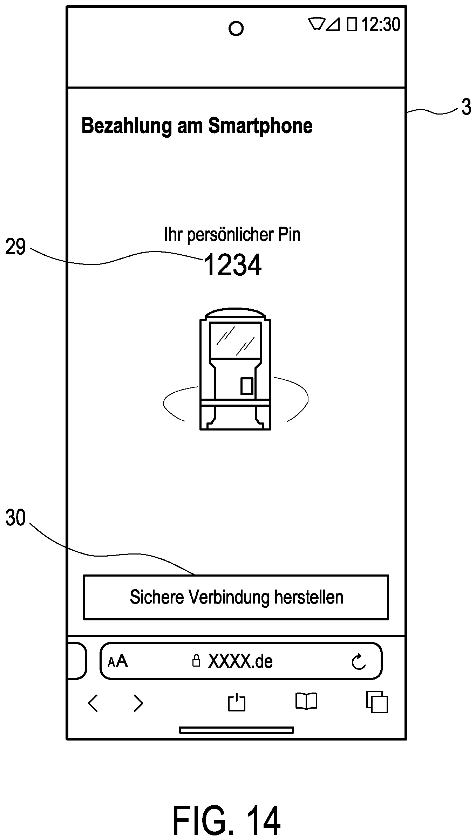

Die grafische Benutzeroberfläche auf dem Smartphone 3 kann auch in dieser Ausführungsform einen Button 30 umfassen, den der Benutzer 2 betätigen kann, um zu signalisieren, dass der Benutzer 2 eine sichere Verbindung für den Task wünscht. Mit anderen Worten, mit dem Betätigen des Buttons 30 kann der Benutzer 2 bestätigen, dass eine Verbindung zu dem Tasksystem 32 gewünscht ist. Der Button 30 ist beispielhaft in Fig. 14 gezeigt.

Das Betätigen des Buttons wird dem Serversystem 9 mitgeteilt (Pfeil 306), wobei die entsprechende von dem Smartphone 3 an das Serversystem 9 übermittelte Mitteilung eine von dem Benutzer 2 veranlasste Mitteilung ist. Danach informiert das Serversystem 9 die Fotostation 4, dass eine vom Benutzer veranlasste Mitteilung von dem Smartphone 3 an das Serversystem 9 geschickt worden ist (Pfeil 307). Diese Mitteilung von dem Serversystem 9 zu der Fotostation 4 ist bevorzugt auch eine Websocket-Mitteilung.

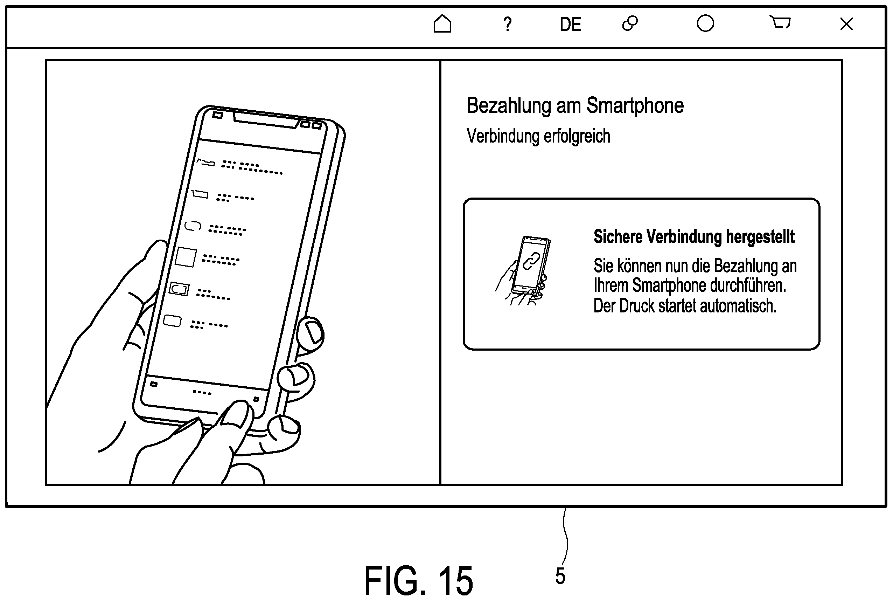

Nachdem die Fotostation 4 die Mitteilung von dem Serversystem 9 erhalten hat, dass eine von dem Benutzer veranlasste Mitteilung von dem Smartphone 3 an das Serversystem 9 geschickt worden ist und damit bestätigt worden ist, dass die Verbindung zwischen dem Smartphone 3 und dem Serversystem 9 aufgebaut worden ist, wird dies dem Benutzer 2 auf dem Display 5 der Fotostation 4 angezeigt. Dies ist beispielhaft in Fig. 15 dadurch illustriert, dass dem Benutzer 2 mitgeteilt wird, dass eine sichere Verbindung hergestellt worden ist. Nachdem der Benutzer 2 diese Mitteilung der Verbindung des Smartphones 3 zu dem Serversystem 9 und damit nicht zu einem Manipulationssystem auf der Fotostation 4 gesehen hat, ist die Wahrscheinlichkeit sehr hoch, dass seine nachfolgend von ihm eingegebenen persönlichen Daten sicher sind.

Das Serversystem 9 übermittelt dann einen zweiten Link zum Verbinden des Smartphones 3 mit dem Tasksystem 32 an das Smartphone 3, wonach eine dritte Datenverbindung 26 zwischen dem Smartphone 3 und dem Tasksystem 32 aufgebaut wird. Insbesondere übermittelt das Serversystem 9 als zweiten Link eine URL an das Smartphone 3, wonach das Smartphone 3 und das Tasksystem 32 entsprechend miteinander verbunden werden.

Das Serversystem 9 kann die dritte Datenverbindung 26 zwischen dem Smartphone 3 und dem Tasksystem 32 auch auf eine andere Art initiieren. Das im vorhergehenden Absatz beschriebene Initiieren der dritten Datenverbindung 26 und auch andere Arten dieses Initiierens oder auch Erzeugens der dritten Datenverbindung sind in Fig. 12 durch den Pfeil 308 symbolisiert.

Das Tasksystem 32 interagiert dann mit dem Benutzer 2 über das Smartphone 3, indem auf dem Tasksystem 32 eine Webanwendung durchgeführt wird. In diesem Ausführungsbeispiel ermöglicht die Webanwendung eine Auswahl eines gewünschten Bezahlverfahrens und auch eine Durchführung der Bezahlung. Dies wird in Fig. 12 durch die Pfeile 309 und 310 symbolisiert.

Nachdem der Bezahlvorgang abgeschlossen ist, wird dies von dem Tasksystem 32 an das Serversystem 9 über die Datenverbindung 22 berichtet (Pfeil 311 in Fig. 12). Das Serversystem 9 übermittelt dann eine entsprechende Mitteilung an die Fotostation 4, sodass an der Fotostation 4 bekannt ist, dass der Bezahlvorgang erfolgreich abgeschlossen worden ist (Pfeil 312 in Fig. 12). Auch diese Mitteilung an die Fotostation 4 ist bevorzugt eine Websocket-Mitteilung. Nachdem die Fotostation 4 diese Mitteilung erhalten hat, können die Fotos an der Fotostation 4 ausgedruckt werden.

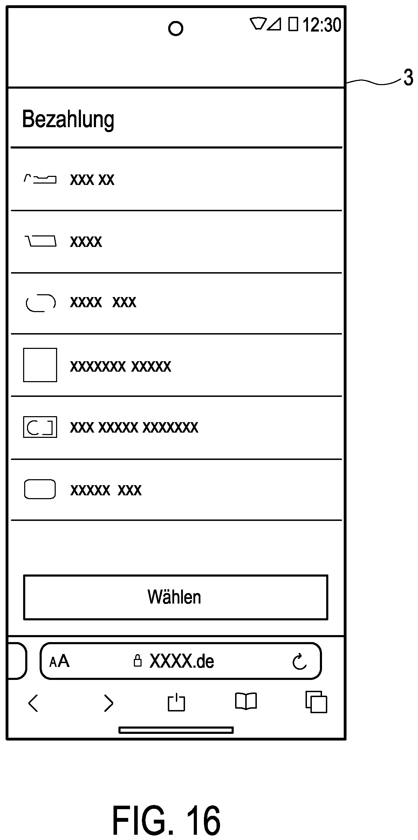

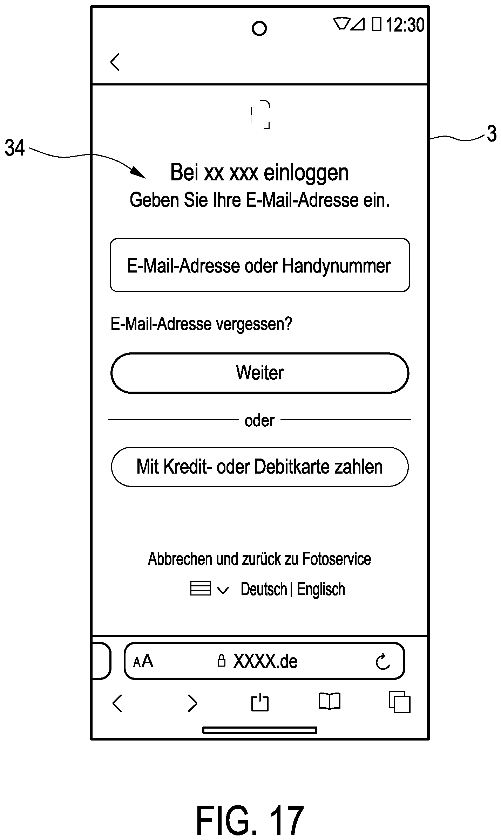

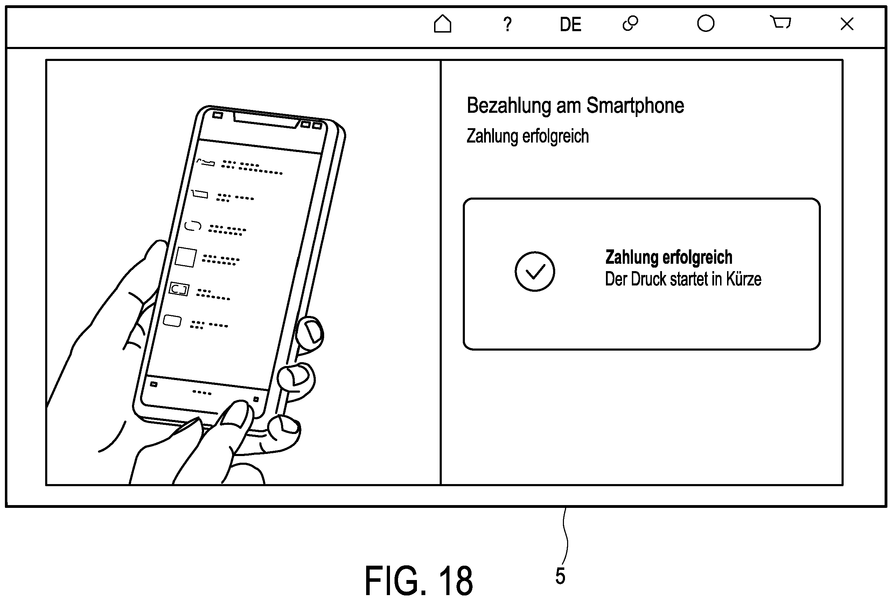

Fig. 16 zeigt beispielhaft eine grafische Benutzeroberfläche, die das Tasksystem 32 zur Verfügung stellt und die auf dem Smartphone 3 angezeigt wird, um es dem Benutzer 2 zu ermöglichen, ein gewünschtes Bezahlverfahren auszuwählen. Fig. 17 zeigt schematisch und beispielhaft eine weitere grafische Benutzeroberfläche, die auf dem Smartphone 3 von dem Tasksystem 32 zur Verfügung gestellt wird, um es dem Benutzer 2 zu ermöglichen, sich für den ausgewählten Bezahlvorgang zu legitimieren. Fig. 17 zeigt daher eine weitere Legitimationsoberfläche 34. Nachdem der Bezahlvorgang erfolgreich abgeschlossen worden ist, wird dies auf dem Display 5 der Fotostation 4 gezeigt, wie es in Fig. 18 illustriert ist.

Das Serversystem 9 ist bevorzugt so ausgebildet, dass es in Antwort auf den Empfang der Task-Mitteilung von der Fotostation 4 nur den ersten Link zum Verbinden des Smartphones 3 mit dem Serversystem 9 an das Smartphone 3 übermittelt und keine weiteren Informationen. Des Weiteren ist die Fotostation 4 bevorzugt so ausgebildet, dass der von der Fotostation 4 generierte erste Code 24 nur den ersten Link zum Verbinden des Smartphones 3 mit dem Serversystem 9 kodiert und keine weiteren Informationen. Der erste Code 24, der bevorzugt ein QR-Code ist, enthält daher bevorzugt nur den ersten Link zum Verbinden des Smartphones 3 mit dem Serversystem 9.

Das Smartphone 3 ist konfiguriert, aus dem ersten Code, der bevorzugt ein QR-Code ist, insbesondere die Internetadresse des Serversystems 9 zu extrahieren, wonach eine Webanwendung zwischen dem Smartphone 3 und dem Serversystem 9 gestartet wird.

Für die Webanwendungen, die auch als Webapp-Sessions bezeichnet werden könnten, wird bevorzugt ein Browser des Smartphones 3 verwendet, wobei die Webanwendungen auf dem Smartphone 3 und dem Serversystem 9 bzw. dem Tasksystem 23, 32 ausgeführt werden. Hierdurch wird auch die jeweilige Datenverbindung zwischen a) dem Smartphone 3 und dem Serversystem 9 bzw. b) dem Smartphone 3 und dem Tasksystem 23, 32 erzeugt. Zur Kommunikation mit dem Serversystem und/oder dem Tasksystem könnte aber auch eine auf dem Smartphone vorhandene App verwendet werden.

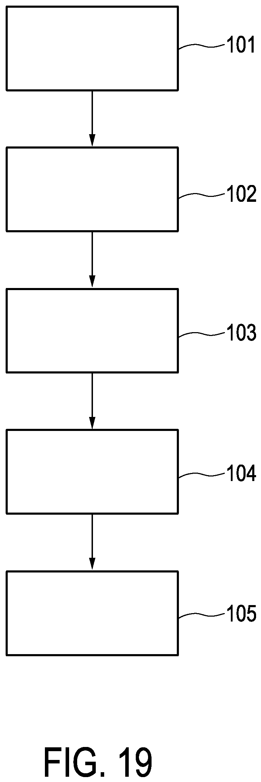

Fig. 19 zeigt schematisch und beispielhaft ein Flussdiagramm eines Verfahrens zum Drucken von Druckobjekten durch eine Druckvorrichtung, insbesondere in einem SB-Bereich beispielsweise einer Drogerie, mittels eines Systems, wie es beispielsweise in den obigen Figuren 4 und 12 dargestellt ist.

In Schritt 101 wird eine Task-Mitteilung, gemäß der ein geforderter Task ausgeführt werden soll, über eine erste Datenverbindung von der Druckvorrichtung zu einem Serversystem übertragen, wonach das Serversystem an die Druckvorrichtung einen ersten Link zum Verbinden eines Benutzergeräts mit dem Serversystem übermittelt.

In Schritt 102 wird der erste Link von der Druckvorrichtung an das Benutzergerät übermittelt, wonach mittels des ersten Links die zweite Datenverbindung zwischen dem Benutzergerät und dem Serversystem aufgebaut wird. In Schritt 103 wird ein Aufbau einer dritten Datenverbindung zwischen dem Benutzergerät und dem Tasksystem durch das Serversystem initiiert, wonach diese dritte Datenverbindung aufgebaut wird.

In Schritt 104 wird der benutzer-interaktive Task durch das Tasksystem ausgeführt, wobei für die Interaktion mit dem Benutzer eine Eingabeeinheit und eine Ausgabeeinheit des Benutzergeräts verwendet werden, wonach in Schritt 105 die Druckobjekte durch die Druckvorrichtung in Abhängigkeit von dem Ergebnis der Ausführung des benutzer-interaktiven Tasks gedruckt werden.

Obwohl oben bestimmte Ausführungsformen beschrieben worden sind, können das System und das Verfahren auch anders ausgebildet sein. Beispielsweise können an Stelle des QR-Codes andere Kodierungstechniken verwendet werden. Es ist zudem auch möglich, dass die Fotostation keine Anschlüsse zum Anschließen des Smartphones aufweist, da zumindest in der mit Bezug auf Fig. 4 beschriebenen Ausführungsform derartige Anschlüsse für das Smartphone nicht benötigt werden.

Obwohl in oben beschriebenen Ausführungsformen Fotos gedruckt werden, können auch andere Druckobjekte gedruckt werden, wie beispielsweise Dokumente, grafische Darstellungen, et cetera.

Obwohl in oben beschriebenen Ausführungsformen die Druckvorrichtung eine Fotostation ist, kann das System auch eine andere Art von Druckvorrichtung sein. So kann die Druckvorrichtung mehrere Komponenten aufweisen, die die beschriebenen verschiedenen Funktionen auszuführen, die miteinander kommunizieren und die zumindest teilweise räumlich verteilt angeordnet sind, also nicht beispielsweise alle Komponenten in einem einzigen Gehäuse oder in einem einzigen Gestell. So können Komponenten, die das eigentliche Ausdrucken ausführen, in einer ersten Einheit zusammengefasst sein und weitere Komponenten, die die Interaktion mit dem Benutzer bzw. dem Benutzergerät durchführen, in einer zweiten Einheit zusammengefasst sein, wobei die erste Einheit und die zweite Einheit miteinander kommunizieren, um den gesamten Druckprozess zu ermöglichen.

Obwohl in oben beschriebenen Ausführungsformen das Benutzergerät ein Smartphone ist, kann das Benutzergerät auch eine andere Art von Benutzergerät, insbesondere eine andere Art eines mobilen Benutzergeräts sein, wie beispielsweise ein Tabletcomputer oder ein Laptop.

Obwohl in oben beschriebenen Ausführungsformen der erste Link mittels eines von einer Kamera aufgenommenen QR-Codes an das Benutzergerät übermittelt worden ist, kann diese Übermittlung auch auf eine andere Art erfolgen, beispielsweise durch Verwendung einer Nahfeldkommunikation (NFC), Bluetooth oder einer anderen elektromagnetischen Übertragungstechnik

In den Ansprüchen schließen die Wörter "aufweisen" und "umfassen" nicht andere Elemente oder Schritte aus und der unbestimmte Artikel "ein" schließt eine Mehrzahl nicht aus.

Eine einzelne Einheit oder Vorrichtung kann die Funktionen mehrerer Elemente durchführen, die in den Ansprüchen aufgeführt sind. Die Tatsache, dass einzelne Funktionen und Elemente in unterschiedlichen abhängigen Ansprüchen aufgeführt sind, bedeutet nicht, dass nicht auch eine Kombination dieser Funktionen oder Elemente vorteilhaft verwendet werden könnte.

Die Steuerung des Systems zum Drucken von Druckobjekten durch eine Druckvorrichtung, des Benutzergeräts selbst und auch des Tasksystems gemäß dem Verfahren zum Drucken von Druckobjekten kann als Programmcode eines Computerprogramms oder mehrerer Computerprogramme und/oder als entsprechende Hardware implementiert sein.

Ein Computerprogramm oder Teile des Computerprogramms wie beispielsweise die oben genannten Webanwendungen können auf einem geeigneten Medium gespeichert und/oder verteilt werden, wie beispielsweise einem optischen Speichermedium oder einem Festkörperspeichermedium, das zusammen mit oder als Teil anderer Hardware vertrieben wird. Das Computerprogramm kann aber auch in anderen Formen vertrieben werden, beispielsweise über das Internet oder andere Telekommunikationssysteme.

Die Bezugszeichen in den Ansprüchen sind nicht derart zu verstehen, dass der Gegenstand und der Schutzbereich der Ansprüche durch diese Bezugszeichen eingeschränkt ist.

Das Wort "insbesondere" ist fakultativ zu verstehen. Beispielsweise bedeutet die Formulierung "Druckobjekte, insbesondere Fotos", dass die Druckobjekte Fotos sein können, aber alternativ auch andere Druckobjekte wie Dokumente, die keine Fotos sind.

Die Erfindung bezieht sich auf ein System zum Drucken von Druckobjekten, insbesondere von Fotos, durch eine Druckvorrichtung, beispielsweise eine Fotostation. Die Druckvorrichtung überträgt eine Task-Mitteilung, die einen gewünschten Task angibt, zu einem Serversystem, das einen Link zum Verbinden eines Benutzergeräts, das beispielsweise ein Smartphone ist, mit dem Serversystem zurücksendet. Der erste Link wird von der Druckvorrichtung an das Benutzergerät übermittelt, wonach mittels des ersten Links eine Datenverbindung zwischen dem Benutzergerät und dem Serversystem aufgebaut wird. Nachdem diese Datenverbindung aufgebaut worden ist, initiiert das Serversystem einen Aufbau einer Datenverbindung zwischen dem Benutzergerät und einem Tasksystem. Nachdem diese Datenverbindung aufgebaut worden ist, wird der benutzer-interaktive Task durch das Tasksystem ausgeführt, wobei für die Interaktion mit dem Benutzer das Benutzergerät verwendet wird. Die Druckobjekte werden schließlich durch die Druckvorrichtung in Abhängigkeit von dem Ergebnis der Ausführung des benutzer-interaktiven Tasks gedruckt.

## Patentansprüche

1. System zum Drucken von Druckobjekten, insbesondere von Fotos, durch eine Druckvorrichtung, insbesondere in einem SB-Bereich beispielsweise einer Drogerie, wobei das System (1) umfasst:
- ein Serversystem (9), das mit der Druckvorrichtung (4) über eine erste Datenverbindung (20) verbunden ist und mit einem Benutzergerät (3) eines Benutzers (2), insbesondere eines Smartphones, über eine zweite Datenverbindung (21) verbindbar ist,
- die Druckvorrichtung (4), wobei die Druckvorrichtung (4) konfiguriert ist, die Druckobjekte zu drucken,
wobei das System (1) so konfiguriert ist, dass die Druckvorrichtung (4), das Benutzergerät (3), das Serversystem (9) und ein Tasksystem (23, 32), das ausgebildet ist, einen von der Druckvorrichtung (4) geforderten benutzer-interaktiven Task, insbesondere ein Übermitteln von auszudruckenden Fotos an die Druckvorrichtung (4), auszuführen, wie folgt, gesteuert werden:
- die Druckvorrichtung (4) überträgt eine Task-Mitteilung, gemäß der der geforderte Task ausgeführt werden soll, zu dem Serversystem (9), wonach das Serversystem (9) an die Druckvorrichtung (4) einen ersten Link zum Verbinden des Benutzergeräts (3) mit dem Serversystem (9) übermittelt,
- der erste Link wird von der Druckvorrichtung (4) an das Benutzergerät (3) übermittelt, wonach mittels des ersten Links die zweite Datenverbindung (21) zwischen dem Benutzergerät (3) und dem Serversystem (9) aufgebaut wird,
- nachdem die zweite Datenverbindung (21) zwischen dem Benutzergerät (3) und dem Serversystem (9) aufgebaut worden ist, initiiert das Serversystem (9) einen Aufbau einer dritten Datenverbindung zwischen dem Benutzergerät (3) und dem Tasksystem (23, 32),
- nachdem die dritte Datenverbindung (26) zwischen dem Benutzergerät (3) und dem Tasksystem (23, 32) aufgebaut worden ist, wird der benutzer-interaktive Task durch das Tasksystem (23, 32) ausgeführt, wobei für die Interaktion mit dem Benutzer (2) eine Eingabeeinheit und eine Ausgabeeinheit des Benutzergeräts (3) verwendet werden, und
- die Druckobjekte werden durch die Druckvorrichtung (4) in Abhängigkeit von dem Ergebnis der Ausführung des benutzer-interaktiven Tasks gedruckt.

2. System zum Drucken von Druckobjekten gemäß Anspruch 1, **dadurch gekennzeichnet, dass** das System so konfiguriert ist, dass die Übermittlung des ersten Links von der Druckvorrichtung (4) an das Benutzergerät (3) ein Erzeugen eines ersten Codes (24), der den ersten Link zum Verbinden mit dem Serversystem (9) enthält, und ein Darstellen des ersten Codes (24) und einer Aufforderung (25) an den Benutzer (2), den ersten Code (24) mittels einer Kamera des Benutzergeräts (3) aufzunehmen, auf einer Ausgabeeinheit (5) der Druckvorrichtung (4) umfasst.

3. System zum Drucken von Druckobjekten gemäß Anspruch 2, **dadurch gekennzeichnet, dass** der erste Code (24) nur den ersten Link zum Verbinden des Benutzergeräts (3) mit dem Serversystem (9) kodiert.

4. System zum Drucken von Druckobjekten gemäß einem der vorhergehenden Ansprüche, **dadurch gekennzeichnet, dass** das System (1) so konfiguriert ist, dass auf dem Benutzergerät (3) eine grafische Benutzeroberfläche erzeugt wird, die es dem Benutzer (2) ermöglicht, zu veranlassen, dass eine Mitteilung von dem Benutzergerät (3) zu dem Serversystem (9) übertragen wird, wobei das Serversystem (9) die dritte Datenverbindung erst initiiert, nachdem es diese Mitteilung erhalten hat.

5. System zum Drucken von Druckobjekten gemäß Anspruch 4, **dadurch gekennzeichnet, dass** die Ausgabeeinheit (5) der Druckvorrichtung (4) ein Display ist und das System (1) so konfiguriert ist, dass die Druckvorrichtung (4) einen zweiten Code (29) erzeugt, der insbesondere eine mehrstellige numerische oder alphanumerische Zeichenfolge ist, diesen zu dem Serversystem (9) überträgt und diesen zudem auf dem Display (5) der Druckvorrichtung (4) anzeigt, wobei, nachdem die zweite Datenverbindung (21) zwischen dem Benutzergerät (3) und dem Serversystem (9) aufgebaut worden ist, der zweite Code (29) von dem Serversystem (9) auf das Benutzergerät (3) übertragen wird, wobei die grafische Benutzeroberfläche, die es dem Benutzer (2) ermöglicht, zu veranlassen, dass eine Mitteilung von dem Benutzergerät (3) zu dem Serversystem (9) übertragen wird, auch den zweiten Code (29) anzeigt.

6. System zum Drucken von Druckobjekten gemäß einem der vorhergehenden Ansprüche, **dadurch gekennzeichnet, dass** das System (1) so konfiguriert ist, dass, nachdem die zweite Datenverbindung (21) zwischen dem Benutzergerät (3) und dem Serversystem (9) aufgebaut worden ist, das Serversystem (9) dies der Druckvorrichtung (4) mitteilt, wonach dem Benutzer (2) mittels einer Ausgabeeinheit (5) der Druckvorrichtung (4) angezeigt wird, dass die zweite Datenverbindung (21) zwischen dem Benutzergerät (3) und dem Serversystem (9) aufgebaut worden ist.

7. System zum Drucken von Druckobjekten gemäß Anspruch 6, soweit rückbezogen auf Anspruch 4, **dadurch gekennzeichnet, dass** das System (1) so konfiguriert ist, dass dem Benutzer (2) mittels der Ausgabeeinheit (5) der Druckvorrichtung (4) angezeigt wird, dass die zweite Datenverbindung (21) zwischen dem Benutzergerät (3) und dem Serversystem (9) aufgebaut worden ist, erst nachdem das Serversystem (9) die Mitteilung erhalten hat, die von dem Benutzer (2) über das Benutzergerät (3) veranlasst worden ist, und das Serversystem (9) eine Mitteilung an die Druckvorrichtung (4) gesendet hat, dass das Serversystem (9) eine von dem Benutzer (2) veranlasste Mitteilung erhalten hat.

8. System zum Drucken von Druckobjekten gemäß einem der vorhergehenden Ansprüche, **dadurch gekennzeichnet, dass** das System (1) so konfiguriert ist, dass das Serversystem (9) den Aufbau der dritten Datenverbindung initiiert, indem das Serversystem (9) einen zweiten Link zum Verbinden des Benutzergeräts (3) mit dem Tasksystem (23, 32) an das Benutzergerät (3) übermittelt, wonach die dritte Datenverbindung (26) zwischen dem Benutzergerät (3) und dem Tasksystem (23, 32) mittels des übermittelten zweiten Links aufgebaut wird.

9. System zum Drucken von Druckobjekten gemäß einem der vorgehenden Ansprüche, **dadurch gekennzeichnet, dass** das System (1) so konfiguriert ist, dass das Serversystem (9), in Antwort auf den Empfang der Task-Mitteilung von der Druckvorrichtung (4), nur den ersten Link zum Verbinden des Benutzergeräts (3) mit dem Serversystem (9) an die Druckvorrichtung (4) übermittelt.

10. System zum Drucken von Druckobjekten gemäß einem der vorgehenden Ansprüche, **dadurch gekennzeichnet, dass** das Tasksystem (23) konfiguriert ist, eine Benutzerschnittstelle (31) auf dem Benutzergerät (3) bereitzustellen, die es dem Benutzer (2) ermöglicht, in dem Tasksystem (23) gespeicherte Druckobjekte auszuwählen, wobei das System (1) so konfiguriert ist, dass eine Datenverbindung zwischen der Druckvorrichtung (4) und dem Tasksystem (23) aufgebaut wird, wonach die ausgewählten Druckobjekte von dem Tasksystem (23) auf die Druckvorrichtung (4) übertragen werden, die die ausgewählten Druckobjekte druckt.

11. System zum Drucken von Druckobjekten gemäß Anspruch 10, **dadurch gekennzeichnet, dass** das System (1) so konfiguriert ist, dass das Serversystem (9) für die Übertragung der ausgewählten Fotos von dem Tasksystem (23) zu der Druckvorrichtung (4) einen Druckobjekt-Link von dem Tasksystem (23) empfängt, wonach das Serversystem (9) den Druckobjekt-Link an die Druckvorrichtung (4) überträgt, die den Druckobjekt-Link zum Aufbau der Datenverbindung zwischen der Druckvorrichtung (4) und dem Tasksystem (23) verwendet, über die die ausgewählten Druckobjekte von dem Tasksystem (23) auf die Druckvorrichtung (4) übertragen werden.

12. System zum Drucken von Druckobjekten gemäß Anspruch 11, **dadurch gekennzeichnet, dass** für jedes ausgewählte Druckobjekt ein jeweiliger Druckobjekt-Link verwendet wird.

13. Druckvorrichtung zum Drucken von Druckobjekten, insbesondere in einem SB-Bereich beispielsweise einer Drogerie, wobei die Druckvorrichtung (4) ausgebildet ist, als Druckvorrichtung (4) des Systems gemäß einem der Ansprüche 1 bis 12 verwendet zu werden.

14. Serversystem zur Kommunikation mit a) einer Druckvorrichtung (4) zum Drucken von Fotos, insbesondere in einem SB-Bereich beispielsweise einer Drogerie, und b) einem Benutzergerät (3), wobei das Serversystem (9; 509) ausgebildet ist, als Serversystem (5; 509) des Systems gemäß einem der Ansprüche 1 bis 12 verwendet zu werden.

15. Verfahren zum Drucken von Druckobjekten durch eine Druckvorrichtung (4), insbesondere in einem SB-Bereich beispielsweise einer Drogerie, mittels eines Systems (1) gemäß einem der Ansprüche 1 bis 12, wobei das Verfahren umfasst:
- Übertragung einer Task-Mitteilung, gemäß der ein geforderter Task ausgeführt werden soll, über eine erste Datenverbindung (20) von der Druckvorrichtung (4) zu einem Serversystem (9), wonach das Serversystem (9) an die Druckvorrichtung (4) einen ersten Link zum Verbinden eines Benutzergeräts (3) mit dem Serversystem (9) übermittelt,
- Übermittlung des ersten Links von der Druckvorrichtung (4) an das Benutzergerät (3), wonach mittels des ersten Links die zweite Datenverbindung (21) zwischen dem Benutzergerät (3) und dem Serversystem (9) aufgebaut wird,
- Initiieren eines Aufbaus einer dritten Datenverbindung zwischen dem Benutzergerät (3) und dem Tasksystem (23, 32) durch das Serversystem (9),
- Ausführen des benutzer-interaktiven Tasks durch das Tasksystem (23, 32), wobei für die Interaktion mit dem Benutzer eine Eingabeeinheit und eine Ausgabeeinheit des Benutzergeräts (3) verwendet werden, und
- Drucken der Druckobjekte durch die Druckvorrichtung (4) in Abhängigkeit von dem Ergebnis der Ausführung des benutzer-interaktiven Tasks.

16. Computerprogramm zum Drucken von Druckobjekten durch eine Druckvorrichtung (4), insbesondere in einem SB-Bereich beispielsweise einer Drogerie, wobei das Computerprogramm Programmcodemittel aufweist, die angepasst sind, ein System (1) zum Drucken von Druckobjekten durch eine Druckvorrichtung (4) gemäß einem der Ansprüche 1 bis 12, das Benutzergerät (3) und das Tasksystem (23, 32) derart zu steuern, dass das Verfahren zum Drucken von Fotos an einer Druckvorrichtung gemäß Anspruch 15 durchgeführt wird, wenn das Computerprogramm auf dem System, dem Benutzergerät (3) und dem Tasksystem (23, 32) ausgeführt wird.
